(19) Europäisches Patentamt
European Patent Office
Office européen des brevets

(11) **EP 2 932 593 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
***H02P 1/24*** *(2006.01)*   ***F04B 49/06*** *(2006.01)*

(21) Anmeldenummer: **13791736.5**

(22) Anmeldetag: **30.10.2013**

(86) Internationale Anmeldenummer:
**PCT/EP2013/003270**

(87) Internationale Veröffentlichungsnummer:
**WO 2014/090355 (19.06.2014 Gazette 2014/25)**

(54) **VERDICHTER ZUR ERZEUGUNG VON DRUCKLUFT, DRUCKLUFTVERSORGUNGSANLAGE, PNEUMATISCHES SYSTEM UND VERFAHREN ZUM BETRIEB EINES VERDICHTERS**

COMPRESSOR FOR PRODUCING COMPRESSED AIR, COMPRESSED AIR SUPPLY SYSTEM, PNEUMATIC SYSTEM AND METHOD FOR OPERATING A COMPRESSOR

COMPRESSEUR POUR PRODUIRE DE L'AIR COMPRIMÉ, INSTALLATION D'APPORT D'AIR COMPRIMÉ, SYSTÈME PNEUMATIQUE ET PROCÉDÉ POUR FAIRE FONCTIONNER UN COMPRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2012 DE 102012024400**

(43) Veröffentlichungstag der Anmeldung:
**21.10.2015 Patentblatt 2015/43**

(73) Patentinhaber: **WABCO GmbH**
**30453 Hannover (DE)**

(72) Erfinder:
• **BREMEIER, Ralf**
**32689 Kalletal (DE)**
• **KOUMENDA, Pierre Celestin**
**30655 Hannover (DE)**
• **MEIER, Jörg**
**31840 Hessisch Oldendorf (DE)**
• **SOHN, Robert**
**30559 Hannover (DE)**
• **STABENOW, Uwe**
**30880 Laatzen (DE)**

(74) Vertreter: **Lauerwald, Jörg**
**Wabco GmbH**
**Postfach 91 12 62**
**30432 Hannover (DE)**

(56) Entgegenhaltungen:
DE-A1-102010 054 710   DE-A1-102012 201 253
US-A1- 2005 068 001   US-B2- 8 228 648

**Beschreibung**

Die Erfindung betrifft einen Verdichter gemäß dem Oberbegriff des Anspruchs 1. Die Erfindung betrifft weiter eine Druckluftversorgungsanlage und ein pneumatisches System sowie ein Verfahren zum Betrieb eines Verdichters.

Ein Verdichter der eingangs genannten Art hat sich für eine Vielzahl von Anwendungen bewährt, insbesondere jedoch zur Erzeugung von Druckluft für eine Druckluftversorgungsanlage eines Fahrzeugs. Dabei weist ein Verdichter einen Elektromotor in Form eines bürstenbehafteten Gleichstrom-Elektromotors und einen Kompressor auf, der über den Elektromotor antreibbar ist. Der hier so bezeichnete bürstenbehaftete Gleichstrom-Elektromotor (BDC-Motor) hat sich aus verschiedensten Gründen gegenüber einem bürstenlosen Gleichstrommotor (BLDC-Motor) bewährt, insbesondere bei der vorgenannten Anwendung einer Druckluftversorgungsanlage eines Fahrzeugs.

Ein BLDC-Motor ist eine Bauform eines Gleichstrommotors, bei welcher der bei bürstenbehafteten Gleichstrom-Elektromotoren vorgesehene mechanische Kommutator mit Bürsten zur Stromwendung durch eine elektrische Schaltung ersetzt ist. BLDC-Motoren eignen sich zum Antrieb von vergleichsweise geringlastig ausgelegten Maschinen, wie Ventilatoren, Antrieben in Diskettenlaufwerken, Kompressoren, Videorecordern oder Modellflugzeugen und dergleichen, haben jedoch diverse Nachteile bei automotiven Anwendungen mit höheren Lastanforderungen; insbesondere erweist sich ein bürstenbehafteter Gleichstrommotor grundsätzlich als die günstigere Variante, jedenfalls bei Anwendungen mit höheren Anforderungen hinsichtlich Verlässlichkeit und Lastverträglichkeit.

Andererseits hat ein üblicherweise über ein Kompressor-Relais angesteuerter und mittels Gleichstrom-Bürstenmotor angetriebener Kompressor durch seine hohe Leistungsaufnahme diverse Nachteile beim Einschalten und beim Ausschalten, ggf. auch beim Betrieb unter unterschiedlichen Lastbedingungen.

Um solche Nachteile jedenfalls ansatzweise zu beheben, ist beispielsweise in WO 2010/045993 ein Elektromotor zum Antrieb eines Kompressors einer Luftversorgungseinheit eines Fahrzeugs vorgesehen, wobei der Elektromotor zumindest einen Halbleiterschalter zur Ansteuerung des Elektromotors aufweist. Der Halbleiterschalter und somit der Elektromotor wird von einem Steuereinrichtung mit einer pulsweiten-modulierten Spannung angesteuert. Über das Puls-Pausen-Verhältnis dieser Spannung kann die Drehzahl des Elektromotors gesteuert werden. Hierdurch ist zum Beispiel ein Sanft-Anlauf des Elektromotors möglich. Ein Sensorausgang des Halbleiterschalters ist über eine Messleitung mit einer Steuereinrichtung verbunden. Der Sensorausgang dient zur Ausgabe eines Stromsignals, welches proportional zu dem durch den Halbleiterschalter und somit durch den Elektromotor fließenden Stroms ist. Anhand des Stromsignals wird in der Steuereinrichtung die Drehzahl des Elektromotors und der von dem Kompressor erzeugte Druck ermittelt. In dem Fall ist ein Halbleiterschalter in einer Bürstenbrücke des Elektromotors integriert.

Eine solche Lösung erweist sich grundsätzlich bereits jedenfalls als vorteilhaft gegenüber üblicherweise auf Thyristoren beruhenden Sanft-Anlaufschaltungen, auch wenn diese vergleichsweise aufwändig, beispielsweise mit einem Zeitglied auf Basis eines Steuertransistors, ausgebildet sind, wie in DE 2 758 309 C2 für einen Universalmotor offenbart.

Dennoch erweist sich der Betrieb eines Verdichters zur Erzeugung von Druckluft als noch verbesserbar, insbesondere hinsichtlich der Begrenzung eines Betriebsstroms des Elektromotors, insbesondere hinausgehend über die grundsätzlich positive Herangehensweise der WO 2010/045993 A1.

Die DE102012201243A1 beschreibt einen Kompressor mit einem Bürstenmotor und einem Gaseinlassströmungspfad zur aktiven Kühlung der Bürsten des Motors.

Die US20050068001A1 beschreibt einen Frequenzumrichter zum Anschluss an unterschiedliche Eingangsspannungen, wobei bei geringen Eingangsspannungen des Frequenzumrichters der Ausgangsstrom, insbesondere für einen Drehstrommotor, begrenzt werden kann.

An dieser Stelle setzt die Erfindung an, deren Aufgabe es ist, eine Vorrichtung und ein Verfahren anzugeben --insbesondere zur Druckluftversorgung eines Fahrzeugs ausgelegt-- bei welcher die mittels einer elektronischen Steuereinrichtung unter Begrenzung eines Betriebsstroms des Elektromotors vorgesehene Steuerung verbessert ist. Insbesondere soll die Steuerung allgemein zur Verbesserung der Betriebsweise eines Verdichters ausgelegt sein, vorzugsweise zur Realisierung eines Sanft-Anlaufs, eines Ausschaltbetriebs und/oder eines Normalbetriebs. Vorzugsweise soll, insbesondere bei einem Normalbetrieb, eine Drehzahlregelung des Kompressors möglich sein.

Die Aufgabe betreffend die Vorrichtung wird durch die Erfindung mit einem Verdichter des Anspruchs 1 gelöst. Bei einem Verdichter der eingangs genannten Art sind, erfindungsgemäß weiter die Merkmale des kennzeichnenden Teils des Anspruchs 1 vorgesehen.

Die Erfindung geht von der Überlegung aus, dass grundsätzlich vorteilhaft der Elektromotor mittels eines elektronischen Steuermoduls unter Begrenzung eines Betriebsstroms des Elektromotors gesteuert werden sollte. Dabei geht das Konzept der Erfindung davon aus, dass der Elektromotor in Form eines bürstenbehafteten Gleichstrom-Elektromotors grundsätzlich zu bevorzugen ist. Dies erweist sich insbesondere als vorteilhaft für eine Druckluftversorgungsanlage eines Fahrzeugs; nämlich insbesondere bei der Verwendung des Verdichters zur Erzeugung von Druckluft in einer Druckluftzuführung der Druckluftversorgungsanlage. Damit geht das Konzept der Erfindung in grundsätzlich überlegener Weise von dem Betrieb eines bürstenbehafteten Gleichstrom-Elektromotors (BDC-Motor) aus, jedoch unter Vermeidung der mit einem Relais-Betrieb verknüpften Nachteile, wie sie beispielsweise in WO 2010/045993 A1 beschrieben sind.

Darüber hinaus hat die vorliegende Erfindung erkannt, dass das elektronische Steuermodul --da insbesondere für einen Sanft-Anlauf geeignet auch als CSS-Steuerung (CSS, Compressor-Soft-Start) bezeichnet-- noch verbessert werden kann. Erfindungsgemäß ist vorgesehen, dass das elektronische Steuermodul (CSS-Steuermodul) einen Steuerbaustein, wie einen Mikrocontroller oder dergleichen mit Logik versehenen Baustein, aufweist und ein ausführbares Programmmodul aufweist.

Das Konzept der Erfindung führt auch auf eine Druckluftversorgungsanlage des Anspruchs 20 und ein pneumatisches System des Anspruchs 21.

Die Aufgabe hinsichtlich des Verfahrens wird durch die Erfindung mit einem Verfahren zum Betrieb eines Verdichters mit einem Elektromotor in Form eines bürstenbehafteten Gleichstrom-Elektromotors (BDC-Motor) gelöst gemäß den Merkmalen des Anspruchs 22.

Anders ausgedrückt wird für den zeitlich transienten Betrieb des bürstenbehafteten Gleichstrom-Elektromotors z. B. nicht lediglich eine zeitunabhängige Betriebsstrombegrenzung vorgesehen. Vielmehr wird vorteilhaft eine Betriebsstrombegrenzung als Funktion der Zeit in veränderlicher Weise vorgegeben, insbesondere wenigstens ein erster und ein zweiter voneinander unterschiedlicher Schwellstrom vorgegeben. Darauf aufbauend ermöglicht das Konzept der Erfindung nicht nur die Vorgabe eines maximalen Schwellstroms, sondern darüber hinaus auch --über die zeitlich variable Vorgabe von den Betriebsstrom begrenzenden Schwellströmen-- die Vorgabe eines Gradienten für den Betriebsstrom.

Das auf einem bürstenbehafteten Gleichstrom-Elektromotor (BDC-Motor) aufbauende Konzept der Erfindung ermöglicht es, unter Beibehaltung der Überlegenheit und der Vorteile des bürstenbehafteten Gleichstrom-Elektromotors (BDC-Motor), diesen in verbesserter Weise hinsichtlich des Betriebsstroms zu begrenzen. Auf Basis des Konzepts der Erfindung ist nicht nur eine Absolut-, sondern auch eine Gradientenbegrenzung des Betriebsstroms vorteilhaft möglich.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Eine besonders bevorzugte Weiterbildung der Erfindung führt auf eine Ausführungsform die anhand der Zeichnung beschrieben ist. Diese sieht vor, dass dem Konzept folgend ein Kompressor-Relais durch einen mittels Mikrocontroller angesteuerten Halbleiterschalter ersetzt ist. Über ein im Mikrocontroller hinterlegtes Programmmodul wird bei einer Einschaltanforderung des Kompressors die zulässige Stromaufnahme des Kompressors begrenzt. Der zulässige Strom bei Einschaltanforderung kann zeitlich derart verändert werden, dass sowohl der Anlaufstrom-Peak wie auch der Anlaufstrom-Gradient (dI/dt) beeinflusst wird. Dies geschieht durch eine schnelle Ansteuerung des Halbleiterschalters.

Über ein im Mikrocontroller hinterlegtes Programmmodul kann auch bei einer Ausschaltanforderung des Kompressors der zulässige Ausschalt-Stromgradient des Kompressors begrenzt werden. Auch dies kann durch eine schnelle Ansteuerung des Halbleiterschalters umgesetzt werden.

Über ein im Mikrocontroller hinterlegtes Programmmodul kann auch nach Ende des Einschaltvorganges (also bei laufendem Kompressor) durch eine PWM-Ansteuerung mit variablem Puls-Pausenverhältnis oder mit variabler Frequenz die Stromaufnahme des Kompressors derart geregelt werden, dass sich die lastabhängigen, insbesondere druckabhängigen, Drehzahländerungen minimieren lassen.

Auf der Grundlage des Konzepts lässt sich ein Steuermodul ausbilden, einen den Betriebsstrom begrenzenden Schwellstrom zeitlich variabel vorzugeben. Im Rahmen einer besonders bevorzugten Weiterbildung ist das Programmmodul ausgebildet zur Begrenzung des Betriebsstroms wenigstens eine Schwellstrom-Grenzfunktion des Schwellstroms als Funktion der Zeit vorzugeben. Dadurch ist es besonders gut möglich, den Betriebsstrom zielgenau unterhalb einer Enveloppe zu halten; vorteilhaft wird die Enveloppe im Wesentlichen durch die Schwellstrom-Grenzfunktion vorgegeben. Die Weiterbildung hat erkannt, dass sich dadurch generell der Betrieb des Elektromotors, insbesondere unter Begrenzung einer Betriebsenergieversorgung wie einem Betriebsstrom und/oder einer Betriebsspannung, in weiter verbesserter Weise erreichen lässt.

Insbesondere ist in einer Weiterbildung vorgesehen, dass der Steuerbaustein ausgebildet ist, den Betrieb --insbesondere die Betriebsenergieversorgung, d. h. insbesondere einen Betriebsstrom und/oder eine Betriebsspannung-- des Elektromotors zu unterbrechen, insbesondere wiederholt kurzzeitig zu unterbrechen. Dazu kann besonders bevorzugt eine Betriebsspannung des Elektromotors unterbrochen werden. Eine Unterbrechung des Betriebs --insbesondere der Betriebsenergieversorgung, d. h. insbesondere eines Betriebsstroms und/oder einer Betriebsspannung-- erfolgt vorzugsweise für den Fall, dass der Betriebsstrom den Schwellstrom der wenigstens einen Schwellstrom-Grenzfunktion erreicht, insbesondere überschreitet oder unterschreitet. Beispielsweise kann ein zulässiger Betriebsstrom des Elektromotors zum Betrieb des Kompressors von einem Startwert bis zu einem Endwert gemäß einer vorgegebenen Funktion der Zeit erhöht werden oder erniedrigt werden.

Vorteilhaft kann auf Grundlage des Konzepts der Erfindung, ein Anlaufstrom-peak und/oder eine Phasenlänge eines zugeordneten Anlauf- und/oder Ausschaltzeitabschnitts und/oder ein Anlaufstromgradienten gezielt beeinflusst werden; zusätzlich oder alternativ gilt dies auch für einen Ausschaltstrompeak und einen Ausschaltstromgradienten. In einer Weiterbildung wird es vor allem möglich, dass eine Anlauffähigkeit und/oder Ausschaltlauffähigkeit des Kompressors trotz der Betriebsstrombegrenzung nicht bzw. nicht maßgeblich reduziert ist. Dies beruht wesentlich auf der Tatsache, dass ein den Betriebsstrom begrenzender Schwellstrom zeitlich variabel vorgegeben wird. Hinsichtlich eines verbesserten Ausschaltverhaltens wird vor allem ein akustisch unauffälliger Kompressorauslauf erreichbar.

Im Rahmen einer besonders bevorzugten Weiterbildung ist vorgesehen, dass das elektronische Steuermodul weiter eine Sampling-Einheit aufweist, über die ein tatsächlicher Betriebsstrom des Elektromotors mit einer vorgebbaren Sampling-Rate signalisierbar ist. Vorzugsweise liegt eine Sampling-Rate im Bereich zwischen 100 Hz und 50.000 Hz, gegebenenfalls bis zu 100.000 Hz. Besonders bevorzugt ist eine Sampling-Rate zwischen 20.000 Hz und 30.000 Hz, z. B. 28.000 Hz bei einer Sampling-Rate von 35 $\mu$s.. Je höher eine Sampling-Rate ist, desto enger und gezielter lässt sich ein Anlaufstrom und/oder Ausschaltstrom im Betrieb des Elektromotors hinsichtlich Peak und/oder Gradientenverhalten gezielt steuern. Insbesondere kann sich eine Peakbegrenzung durch Steuerung von Verweilzeiten in Anlaufund/oder Ausschaltzeitabschnitten ergeben, z. B. den weiter unten in Bezug auf die Zeichnung bezeichneten AnT_i-Werten bzw. AusT_i-Werten (i=1..n) von Phasenlängen, wobei n eine natürliche Zahl 1, 2, 3, 4 usw. ist, die bevorzugt zwischen 4 und 10 liegt, aber auch darüber liegen kann. Diese Phasenlängen können auch ein Gradientenverhalten des Anlaufstroms und/oder Ausschaltstroms mit festlegen.

Zusätzlich oder alternativ hat sich eine Vergleichseinheit als vorteilhaft erwiesen, mittels der ein signalisierter tatsächlicher Betriebsstrom mit einem Schwellstrom als Funktion der Zeit vergleichbar ist. Insgesamt kann ein Anund/oder Ausschaltstrom-Peak und/oder -gradientenverhalten durch eine vergleichsweise schnelle Ansteuerung, insbesondere mit vergleichsweise hoher Sampling-Rate des elektronischen Steuermoduls, begrenzt werden.

Im Rahmen einer besonders bevorzugten Weiterbildung hat sich die Vorgabe einer Schwellstrom-Grenzfunktion mit wenigstens einem Maximalwert und/oder einem Gradienten des Schwellstroms als vorteilhaft erwiesen. Im Ergebnis lassen sich damit ein Maximalwert und/oder ein Gradient des Betriebsstroms vorgeben. Beispielsweise hat sich eine Schwellstrom-Grenzfunktion in Form einer linearen Funktion der Zeit als besonders vorteilhaft erwiesen. Für solche und andere Schwellstrom-Grenzfunktionen kann beispielsweise ein Gradient, insbesondere ein Anstiegsgradient und/oder Abfallgradient, für eine bestimmte Verweilzeit einer Zeitphase vorgegeben sein, insbesondere zusätzlich zu einem Amplitudenwert zusätzlich zum Gradienten. Selbstverständlich kann dies auch für Funktionen höheren Grades, beispielsweise ein beliebiges Polynom oder eine Exponentialfunktion, gelten.

Besonders vorteilhaft ist vorgesehen, dass das elektronische Steuermodul zur Steuerung eines Sanft-Anlaufs (CSS, Compressor-Soft-Start) ausgebildet ist, in einer zeitlich begrenzten ersten Zeitphase einen unbegrenzten Anlaufbetriebsstrom zuzulassen. Dies gewährleistet mittels der zeitlich begrenzten ersten Zeitphase vor allem einen sicheren Kompressoranlauf. Insbesondere erfolgt damit in einer ersten zeitlich begrenzten Zeitphase keine direkte Begrenzung eines Betriebsstroms; eine indirekte Begrenzung ergibt sich aus der zeitlich begrenzten Dauer der ersten Zeitphase.

Zusätzlich oder alternativ kann in einer zeitlich begrenzten zweiten Zeitphase ein zeitlich variabel begrenzter Anlaufbetriebsstrom vorgegeben werden. Mittels der zweiten zeitlich begrenzten Zeitphase kann vor allem die gewünschte Begrenzung des Betriebsstroms des Elektromotors zum Antrieb des Kompressors erreicht werden. Insbesondere erfolgt eine Feststellung und gegebenenfalls Unterbrechung des Betriebs --insbesondere einer für den Betrieb erforderlichen Betriebsenergieversorgung wie ein Betriebsstrom und/oder eine Betriebsspannung-- des Elektromotors in der zeitlich begrenzten zweiten Zeitphase mit vergleichsweise hoher Sampling-Rate, die es verbessert, nachhaltig die enge und zielgerechte Führung des Betriebsstroms begrenzt auf einen variabel vorgebbaren Peak und/oder Gradienten (Steigung).

Besonders vorteilhaft ist das Programmmodul ausgebildet, in einer Anlaufphase, vorzugsweise in einer zeitlich begrenzten zweiten Zeitphase, für einen Anlaufbetriebsstrom wenigstens eine erste Anlaufschwellstrom-Grenzfunktion für einen ersten Anlaufzeitabschnitt und eine zweite Anlaufschwellstrom-Grenzfunktion für einen zweiten Anlaufzeitabschnitt vorzugeben. Weitere Anlaufzeitabschnitte --vorzugsweise vier an der Zahl-- lassen sich in einer Anlaufphase für einen Anlaufbetriebsstrom je nach Erforderlichkeit vorgeben. So lässt sich beispielsweise in eine Anlaufphase ein inkremental steigender Schwellstrom vorgeben, so dass in der Anlaufphase der Betriebsstrom gegen einen dadurch grundsätzlich vorgegebenen Anlaufgradienten graduell gesteigert wird. Vorzugsweise ist die Steigung einer ersten Anlaufschwellstrom-Grenzfunktion betragsmäßig größer als die Steigung einer zweiten Anlaufschwellstrom-Grenzfunktion.

Vorteilhaft erfolgt ein Wechsel von einer Anlaufphase zu einer Lastphase unabhängig von einem Betriebsstrom des Kompressors. Dies sichert ebenfalls die Vollfunktionalität des Kompressors nach einer bestimmten Zeit mit Rücksicht auf die daran angeschlossenen Komponenten, insbesondere einer Druckluftversorgungsanlage eines Fahrzeugs.

Die Anlaufphase umfasst vorteilhaft den Sanft-Anlauf des Kompressors nach einer der vorgenannten Weiterbildungen. Die Lastphase ist insbesondere zu verstehen als eine Phase, die nur einen stromunbegrenzten Lauf des Kompressors umfasst.

Vorzugsweise ist ein Wechsel von einer Anlaufphase zu einer Lastphase unabhängig von einer Sampling-Rate in einer letzten Zeitphase eines Sanft-Anlaufs. Die Weiterbildung geht davon aus, dass die Verweilzeiten während der Anlaufphase so bemessen sind, dass nach einer gewissen Verweilzeit in der Tat von einem unbeschadeten Übergang zur Lastphase auszugehen ist. Insofern sieht die Weiterbildung vor allem vor, dass mit einer Einschaltanforderung des Kompressors ein zeitlich begrenzter Rahmen für eine Anlaufphase gegeben ist, nachdem davon ausgegangen werden kann, dass der Kompressor der Leistungsanforderung im Nachgang zur Einschaltanforderung genügen kann.

Vorzugsweise ist das elektronische Steuermodul darüber hinaus zur Steuerung eines Sanft-Ausschaltens ausgebildet. Vorzugsweise kann eine zeitlich begrenzte Zeitphase eines zeitlich variabel begrenzten Ausschaltbetriebsstroms vorgegeben sein. Insbesondere ist vorgesehen, dass eine Ausschaltphase nach zeitlich bestimmter Dauer einer Ausschaltanforderung folgend vorliegt.

Hinsichtlich des Sanft-Ausschaltens ist das Programmmodul vorteilhaft ausgebildet, für den Ausschaltbetriebsstrom wenigstens eine erste Ausschaltschwellstromgrenzfunkton für einen ersten Ausschaltzeitabschnitt und eine zweite Ausschaltschwellstrom-Grenzfunktion für einen zweiten Ausschaltzeitabschnitt vorzugeben. Ähnlich wie bei einem vorbeschriebenen bevorzugten Sanft-Anlauf können eine Anzahl von i=1...n Zeitphasen vorgegeben sein, wobei n eine natürliche Zahl ist. Insbesondere können mehr als zwei Zeitphasen, vorzugsweise eine Anzahl von vier bis zehn Zeitphasen, unter Vorgabe einer jeweiligen Verweilzeit und Gradienten eines Schwellstroms, vorgegeben sein. Insbesondere können z. B. neun Zeitphasen zu je 25 ms Dauer eines Ausschaltzeitabschnittes vorgegeben sein.

Vorteilhaft kann ein Gradientenwert vom Betrag in der Ausschaltphase vorgeben werden. Vorzugsweise reicht für ein Sanft-Ausschaltverhalten die Vorgabe eines Gradienten des Ausschaltstroms; mit Einschränkung kann ein Sanft-Ausschaltverhalten ohne Vorgabe einer Amplitude erfolgen; bevorzugt nur unter Vorgabe eines Gradienten. Vorteilhaft kann mittels des Sanft-Ausschaltens gemäß einer der vorgenannten Weiterbildungen eine Ausschaltphase realisiert werden, bei welcher ein dekremental fallender Betriebsstrom durch entsprechende Unterbrechung des Betriebs, d. h. insbesondere einer Energieversorgung wie ein Strom oder eine Spannung, des Elektromotors realisiert wird. Insbesondere folgt diese einem vorgegebenen Ausschaltgradienten für den Schwellstrom folgend.

Im Rahmen weiterer bevorzugter Weiterbildungen hat es sich als vorteilhaft erwiesen, dass eine Reduzierung, vorteilhaft Kompensation, einer Abhängigkeit einer Drehzahl eines Kompressors vom Gegendruck bei Luftförderung weitgehend behoben wird, jedenfalls aber reduziert ist. Im Rahmen einer anderen Weiterbildung kann eine Kalibrierung der Kennlinie Druck / Stromaufnahme zur Minimierung der Auswirkungen von Toleranzen auf die Drehzahlregelung vorgesehen sein.

Die Weiterbildung hat erkannt, dass grundsätzlich mit steigendem Gegendruck eine Stromaufnahme des Kompressors steigt. Die Weiterbildung hat auch erkannt, dass eine Drehzahl eines Kompressors annähernd proportional zur Versorgungsspannung desselben ist. Insbesondere mittels einer stromabhängigen PWM-Kennlinie zur Steuerung einer Versorgungsspannung lässt sich gemäß dem Konzept der Weiterbildung in besonders bevorzugter Weise die Drehzahl des Kompressors regeln in Bezug auf die Stromaufnahme des Kompressors.

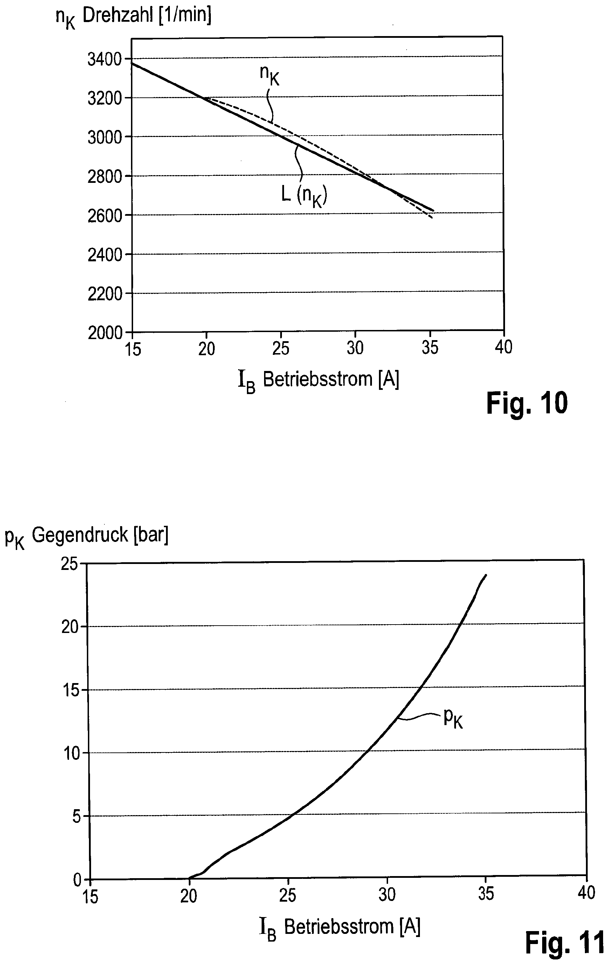

Im Rahmen einer bevorzugten Weiterbildung weist das elektronische Steuermodul eine Regeleinheit auf, die ausgebildet ist, einen Betriebsstrom des Elektromotors zu regeln unter Vorgabe eines Schwellstroms als SOLL-Strom. Im Rahmen einer zusätzlichen oder alternativen bevorzugten Weiterbildung weist das elektronische Steuermodul eine Regeleinheit auf, die ausgebildet ist, eine Drehzahl des Elektromotors zu regeln unter Vorgabe einer Drehzahlobergrenze bzw. einer damit korrelierenden Größe, z. B. einem Strom und/oder einer Spannung für den Betrieb, die mit der Drehzahl in Beziehung gebracht werden kann. Ein Beispiel dazu ist in Bezug auf Fig. 10 erläutert.

Die Weiterbildung hat erkannt, dass ein druckloses Starten eines Kompressors regelmäßig zu einer vergleichsweise hohen Drehzahl im Startvorgang führt; dieser an sich vorteilhafte Vorgang führt vorteilhaft auch zu einer grundsätzlich erwünschten zügigen Versorgung einer Pneumatikanlage, die an eine Druckluftversorgungsanlage angeschlossen sein kann. Allerdings zeigt sich auch, dass eine Drehzahl des Kompressors bei zunehmendem Gegendruck vergleichsweise schnell abnimmt. Dies führt zu akustisch stark auffälligem Betriebsverhalten des Kompressors. Insbesondere hat sich die vergleichsweise hohe transiente Drehzahldynamik des Kompressors bei einem zweistufigen Kompressor hinsichtlich der akustischen Außenwirkung als nachteilig erwiesen. Insbesondere für einen zweistufigen Kompressor erweist sich die Weiterbildung zur Vorgabe einer als Funktion des Betriebsstroms bereichsweise konstanten Drehzahlobergrenze als besonders vorteilhaft. Unter Inkaufnahme eines im Anlaufvorgang hinnehmbar geringeren Volumenstroms der Druckluft werden somit über den gesamten Betriebsvorgang überwiegende akustische Betriebsvorteile erreicht.

Im Rahmen einer besonders bevorzugten Weiterbildung ist vorgesehen, dass die Regeleinheit ausgebildet ist, eine Drehzahlvariabilität des Elektromotors als Funktion des Betriebsstroms über eine PWM-Kennlinie zu begrenzen. Vorteilhaft kann die PWM-Kennlinie in Form einer Effektivspannungsrampe als Funktion des Betriebsstroms vorgegeben sein. Besonders vorteilhaft ist die PWM-Kennlinie in dieser oder anderer Form im Programmmodul des Steuermoduls und/oder der Regeleinheit hinterlegt.

Vorteilhaft weist die PWM-Kennlinie eine untere Effektivspannung bei niedrigem Strom und eine obere Effektivspannung bei hohem Strom auf, wobei die untere Effektivspannung unter der oberen Effektivspannung liegt. Vorteilhaft weist auch die Drehzahlvariabilität des Elektromotors einen oberen Drehzahlwert bei niedrigem Strom und einen unteren Drehzahlwert bei hohem Strom auf, wobei der obere Drehzahlwert über dem unteren Drehzahlwert liegt. Bevorzugt verläuft die PWM-Kennlinie gegenläufig zur Drehzahlvariabilität; insbesondere weist die PWM-Kennlinie eine betragsmäßig gleiche Steigung wie die Drehzahlvariabilität auf, jedoch ein anderes Vorzeichen. Insbesondere ist die Drehzahlobergrenze als Funktion des Betriebsstroms bereichsweise konstant.

Im Ergebnis lässt sich so besonders gut die Drehzahlvariabilität bei Gegendruck am Kompressor kompensieren. Vorzugsweise wird dazu nach Ende eines Einschaltvorgangs, insbesondere nach der Anlaufphase, bei laufendem Kompressor eine PWM-Ansteuerung mit variablem Puls-Pausen-Verhältnis oder mit variabler Frequenz derart vorgenommen, dass druckabhängige Drehzahländerungen minimiert werden.

Die Drehzahlsteuerung oder -regelung über eine PWM-gesteuerte Versorgungsspannung nutzt insbesondere ein Sensorsignal des Kompressorstroms. Beispielsweise kann bei niedriger Drehzahl ein Level für eine Mindestspannung vorgesehen sein. Beispielsweise kann bei niedriger Drehzahl ein Level für eine Höchstspannung vorgesehen sein. Beispielsweise kann auch bei hoher Drehzahl ein Level für eine Mindestspannung vorgesehen sein. Beispielsweise kann auch bei hoher Drehzahl ein Level für eine Höchstspannung vorgesehen sein.

Insbesondere kann die Welligkeit des Stroms benutzt werden, um eine Ist-Drehzahl des Kompressors zu ermitteln. Es hat sich als besonders vorteilhaft erwiesen, dass der Verdichter eine Analyseeinheit aufweist, mittels der eine IST-Drehzahl aus einem zeitlichen Verlauf des Betriebsstroms ermittelbar ist. Vorteilhaft kann die Frequenz einer Vielzahl von periodischen Spitzen einer Stromwelligkeit bestimmt werden, wobei die Frequenz der IST-Drehzahl des Kompressors zugeordnet wird und die IST-Drehzahl als Eingangswert für eine Regeleinheit des elektrischen Steuermoduls genutzt wird, die ausgebildet ist, eine Drehzahl des Elektromotors zu regeln.

Beispielsweise kann ein Wechsel von Verdichtungs- und Ansaugphasen des Kompressors gemäß der Erkenntnis der Weiterbildung einer Spitze aus einer Vielzahl von periodischen Spitzen im zeitlichen Betriebsstromverlauf zugeordnet werden. Zusätzlich oder alternativ kann auch ein Wechsel einer Kommutierung des Elektromotors einer Spitze aus einer Vielzahl von periodischen Spitzen im zeitlichen Betriebsstromverlauf zugeordnet werden.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:

Fig. 1 einen beispielhaften Verlauf eines Anlaufstroms zur Verdeutlichung einer Anlaufstromcharakteristik ohne Strombegrenzung als Funktion der Zeit für einen Betriebsstrom eines Elektromotors, der in Form eines bürstenbehafteten Gleichstrom-Elektromotors gebildet ist, beim Betrieb eines Kompressors eines Verdichters zur Erzeugung von Druckluft für eine Druckluftversorgungsanlage eines Fahrzeugs;

Fig. 2 eine perspektivische Darstellung einer besonders bevorzugten Bauform der Druckluftversorgungsanlage wie sie in Fig. 3 näher dargestellt ist;

Fig. 3 ein Schaltbild eines besonders bevorzugten pneumatischen Systems mit einer Druckluftversorgungsanlage, die eine Druckluftzuführung mit einem Verdichter zur Erzeugung von Druckluft mit einem Elektromotor in Form des bürstenbehafteten Gleichstrom-Elektromotors aufweist und die in dieser Ausführungsform weiter einen zweistufigen Kompressor aufweist;

Fig. 4 in Ansicht (B) ein Systembild einer elektronischen Steuereinrichtung für einen in Ansicht (A) dargestellten Verdichter wie er für eine Druckluftversorgung der Druckluftversorgungsanlage der Fig. 2 vorgesehen ist, wobei die elektronische Steuereinrichtung unter anderem ein elektronisches Steuermodul und ein Regelmodul und eine Analyseeinheit aufweist und in Ansicht (C) ein detailliertes Systembild einer abgewandelten elektronischen Steuereinrichtung für einen in Ansicht (A) dargestellten Verdichter;

Fig. 5 ein Schaubild der Funktionalität des elektronischen Steuermoduls der Fig. 4, mit einem Steuerbaustein und einem ausführbaren Programmmodul und einem Speicher;

Fig. 6 eine besonders bevorzugte Ausführungsform einer Schwellstrom-Grenzfunktion GF des Schwellstroms als Funktion der Zeit für eine Anlaufphase AnP des Elektromotors des Verdichters mit einer beispielhaften Anzahl von n=4 Anlaufzeitabschnitten;

Fig. 7 einen beispielhaften Verlauf eines Anlaufstroms zur Verdeutlichung einer mit einer bevorzugten Strombegrenzung gemäß dem Konzept der Erfindung versehenen Anlaufstromcharakteristik für einen Betriebsstrom eines bürstenbehafteten Elektromotors wie er in Fig. 4 gezeigt ist;

Fig. 8 eine besonders bevorzugte Ausführungsform einer Schwellstrom-Grenzfunktion GF des Schwellstroms als Funktion der Zeit für eine Ausschaltphase AusP des Elektromotors des Verdichters (Kompressor-Ausschaltphase) und einer beispielhaften Anzahl von n=4 Ausschaltzeitabschnitten;

Fig. 9 eine Schemaansicht eines Regelkreises zur Drehzahlregelung eines Normalbetriebs eines Elektromotors M zur Begrenzung einer Drehzahlvariabilität desselben als Funktion des Betriebsstroms;

Fig. 10 ein funktionaler Zusammenhang zwischen Stromaufnahme, also Betriebsstrom IB, und Drehzahl nK des genannten Elektromotors M und eine lineare Anpassung L(nK) daran;

Fig. 11 ein funktionaler Zusammenhang zwischen Stromaufnahme, also Betriebsstrom IB, und Gegendruck pK des genannten Elektromotors M;

Fig. 12 die gegenläufigen Funktionalitäten einer PWM-Ansteuerung (PWM) und Drehzahlabhängigkeit (nK-IST) als Funktion des Betriebsstroms IB und die Nutzung der gegenläufigen Funktionalitäten zur Erreichung einer wenigstens bereichsweise etwas konstanten Drehzahl (nK-SOLL) des genannten Elektromotors M als Funktion des Betriebsstroms IB; nämlich im Rahmen einer Drehzahlregelung durch PWM-Ansteuerung;

Fig. 13 einen Stromverlauf des genannten bürstenbehafteten Elektromotors 500 bei laufendem, insbesondere zweistufigem, Kompressor K zur indirekten Ermittlung der Drehzahl nK-IST desselben aus der Frequenz einer Stromwelligkeit erster Ordnung, die sich vorliegend aus den Verdichtungs- und Ansaugphasen des Kompressors K ergeben - dies kann zur Kalibrierung der "nicht geregelten Kennung" durch Messung von Stromaufnahme und zugehöriger Drehzahl zur Reduzierung von Teleranzen genutzt werden.

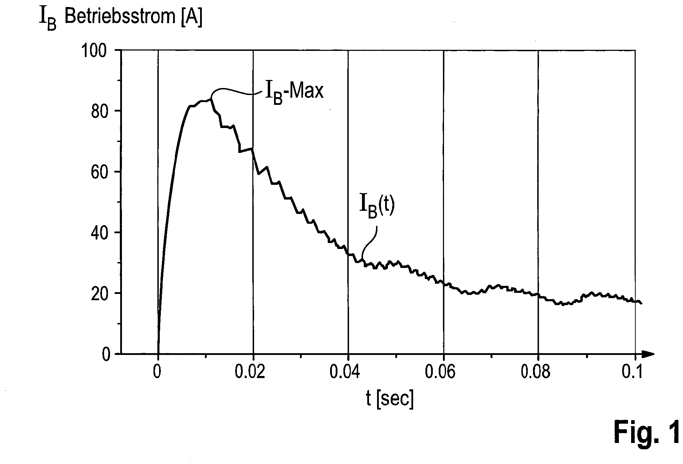

Fig. 1 zeigt mit Bezug auf die Einleitung eine charakteristische Anlaufstromcharakteristik ohne Strombegrenzung mit vergleichsweise hohem Strompegel IB-Max bei etwa 80 Ampere, die sich gegebenenfalls nachteilig auf das Luftversorgungssystem, insbesondere auf andere Komponenten einer Druckluftzuführung, oder allgemein auf andere Fahrzeugsysteme auswirken können. Ein üblicherweise über ein Kompressor-Relais angesteuerter und mittels Gleichstrom-Bürstenmotor angetriebener Kompressor kann durch seine Leistungsaufnahme diverse Nachteile beim Einschalten und beim Ausschalten, ggf. auch beim Betrieb unter unterschiedlichen Lastbedingungen haben.

Diese können sich u. a. auch auf das elektrische Bordnetz des Fahrzeugs und eine Sicherungsauslegung des Kompressor-Versorgungskreises auswirken. Sogar ein unzumutbarer Spannungsabfall über die Kompressor-Versorgungsleitungen im Anlaufmoment kann als Folge der Leistungsaufnahme auftreten und sich damit auf die Anlauffähigkeit des Kompressors auswirken.

Eine beispielhafte Anlaufstromcharakteristik dazu ist in Fig. 1 der Zeichnung dargestellt. Elektrisch angetriebene Kompressoren für PKW-Luftfederungen beispielsweise haben in der Regel eine Leistungsaufnahme von 180 W bis 400 W bei einem Anlaufstrom mit einem Strompegel IB-Max von bis zu 120 A. Bei einem hohen Anlaufstrom, wie in Fig. 1 dargestellt, ergibt sich ein hoher Spannungsabfall, der die Startfähigkeit des Kompressors reduziert. Zur Kompensation müssen deswegen üblicherweise entsprechende Leistungsquerschnitte für die Kompressorversorgung vorgehalten werden. Zudem muss eine Sicherungsauslegung den Anlaufstrom des Kompressors ohne fehlerhaftes Auslösen ertragen können. Insbesondere aber ist im Hinblick auf Auswirkungen auf das elektrische Bordnetz des Fahrzeugs zu verstehen, dass bei einer geschwächten Starterbatterie der Generator den steilen Stromanstieg beim Einschalten des Kompressors mittels Relais üblicherweise nicht ausregeln kann. Dadurch kommt es zu kurzzeitiger Unterspannung im Fahrzeug, was wiederum zu Funktionsstörungen anderer Systeme führen kann. Hier hat es sich bereits als besonderes vorteilhaft erwiesen, eine Galerieentlüftung vor einer Kompressorabschaltung zur Betriebsstromreduzierung des Kompressors vorzunehmen.

Wird ein bürstenbehafteter Gleichstrom-Elektromotor zum Antrieb eines Kompressors über ein Relais dagegen ausgeschaltet, bewirkt eine schlagartige Reduzierung des Strombedarfs um beispielsweise ca. 25 bis 30 A bei geschwächter Batterie eine unerwünschte Beeinflussung des Bordnetzes, was sehr wahrscheinlich zu einer kurzfristigen Überspannung führen kann, die im schlimmsten Fall in der Tat zu Funktionsstörungen anderer Systeme führt.

Hinzu kommt, dass bei einem insbesondere zweistufigen Kompressor die Last-Drehzahl-Charakteristik desselben eine Abhängigkeit von Drehzahl und Kompressor-Gegendruck zeigt. Drehzahländerungen bei laufendem Kompressor können zu akustischen Auffälligkeiten führen. Insbesondere im Vergleich zu einem einstufigen Kompressor zeigt der zweistufige Kompressor --mit einer ersten und einer zweiten Verdichterstufe-- im relevanten Druckbereich eine noch deutlicher ausgeprägte Drehzahlabhängigkeit, die beispielhaft in Fig. 10 und Fig. 11 gezeigt ist. Diese ist bei einem einstufigen Kompressor zwar grundsätzlich auch vorhanden jedoch nicht so deutlich wie bei einem zweistufigen Kompressor; damit ergibt sich insbesondere bei einem zweistufigen Kompressor eine bevorzugte Anwendung einer Drehzahlregelung, die nachfolgend beschrieben ist.

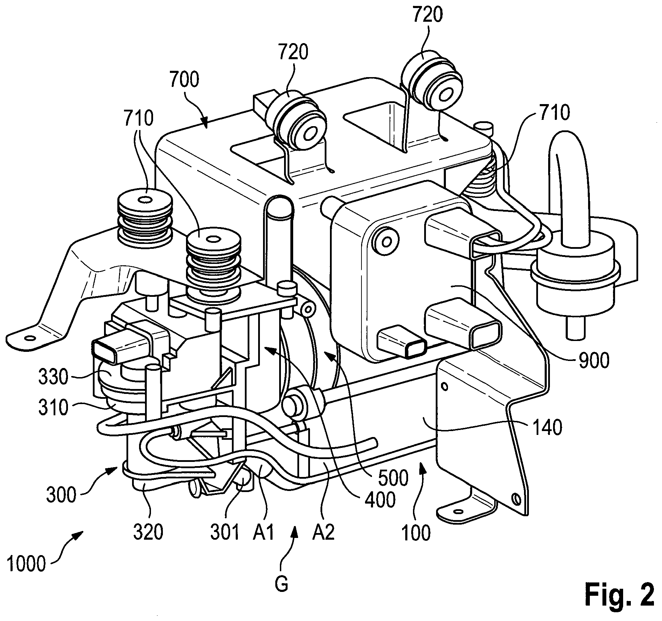

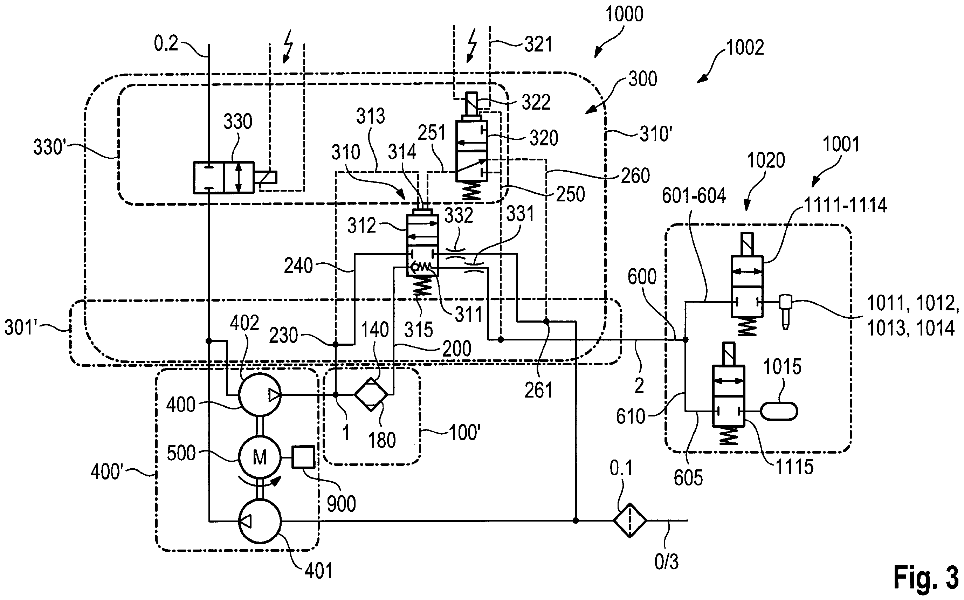

Zur Lösung der vorerläuterten Auffälligkeiten bzw. Probleme wird der Kompressor über eine elektronische Steuereinrichtung 900 zur Umsetzung wenigstens eines Sanft-Anlaufs (CSS - Compressor-Soft-Start) aktiviert und deaktiviert. Eine solche Elektronik wird in unmittelbarer Nähe des Kompressors angebracht und ist in Fig. 2 beispielhaft zusammen mit einer Druckluftversorgungsanlage gezeigt. Zunächst bezugnehmend auf Fig. 2 zeigt diese perspektivisch in Ansicht (A) eine Druckluftversorgungsanlage 1000, die vorliegend zur Versorgung einer Pneumatikanlage 1001 in Form einer Luftfederanlage eines PKW-Fahrzeugs (nicht gezeigt) ausgelegt ist - die Pneumatikanlage 1001 (nicht gezeigt) ist weiter anhand eines Schaltschematas von Fig. 3 erläutert. Zunächst weiter bezugnehmend auf Fig. 2 -- teilweise bereits Fig. 3-- weist die Druckluftversorgungsanlage 1000 einen Elektromotor 500 zum Antrieb eines Verdichters 400 auf, wobei der Verdichter 400 vorliegend als ein Doppelverdichter gebildet ist. Zu verdichtende Luft wird dem Verdichter 400 zugeführt und dann verdichtet einer Pneumatikhauptleitung 200 als Druckluft zugeführt. Ebenfalls angeschlossen an die Pneumatikhauptleitung 200 ist ein Lufttrockner 100 mit einem Trockenbehälter 140, der zur Trocknung der Druckluft in einem Trocknerbett dient, das direkt in Kammern des Trockenbehälters 140 gebildet ist.

Die Pneumatikhauptleitung 200 verbindet über eine weitere Pneumatikleitung 600 insgesamt eine Druckluftzuführung 1 von dem Verdichter 400 zu einem Druckluftanschluss 2 zu einer Galerie 610 der Pneumatikanlage 1001. In der Pneumatikhauptleitung 200 ist auch eine in Fig. 2 nach ihrem Gehäuse ersichtliche Ventilanordnung 300 pneumatisch angeschlossen. Die Ventilanordnung 300 weist vorliegend eine schaltbare Wegeventilanordnung 310 auf, die über ein Steuerventil 320 in Form eines Magnetventils schaltbar ist. Es ist auch ein Boostventil 330 in der Ventilanordnung 300 integriert. Das Boostventil 330 (hier ein 2/2 Boostventil) und das Steuerventil 320 in Form eines Magnetventils (hier ein 3/2 Magnet-Wegeventil) sind vorliegend als Doppelblock, d. h. als Doppelventil, gebildet. Das Doppelventil ist hier an der Wegeventilanordnung 310 in der Ventilanordnung 300 integriert.

Insgesamt ist die Druckluftversorgungsanlage 1000 mit einem Elektromotor 500 und einem zweistufigen Verdichter 400 gebildet, die in Baueinheit mit dem Lufttrockner 100 und der Ventilanordnung 300 sowie der Pneumatikhauptleitung 200 modular assemblierbar sind. Wie im Einzelnen aus Fig. 2 ersichtlich ist, wird eine Gehäuseanordnung G mit dem Elektromotor 500 und dem Verdichter 400 zur Verfügung gestellt, wobei der Verdichter 400 als zentraler Monoblock dient. Insbesondere ist vorliegend der Verdichter 400 in besonders vorteilhafter Weise als zweistufiger Verdichter ausgebildet. An diese Gehäuseanordnung G ist der Lufttrockner 100 und die Ventilanordnung 300 auf gegenüberliegenden Seiten anbringbar. Insbesondere ist der Lufttrockner 100 und die Ventilanordnung 300 auswechselbar an die Gehäuseanordnung G anbringbar. Die aus Fig. 2 erkennbare Gehäuseanordnung G ist zum einen mit dem Elektromotor 500, dem Verdichter 400 und dem Lufttrockner 100 in etwa U-förmig aufgebaut. Die Ventilanordnung 300 ist an der Basis der U-förmigen Anordnung angebracht. Die Gehäuseanordnung G weist eine der Ventilanordnung 300 zugewandte Anschlussebene A1 auf, an welche die Ventilanordnung 300 modular anbringbar ist. Die Gehäuseanordnung G weist eine der Lufttrockneranordnung 100 zugewandte Anschlussseite A2 auf, an welche die Lufttrockneranordnung 100 modular anbringbar ist. Die Anschlussebene A1 und die Anschlussseite A2 sind über einen Anschlussabstand voneinander beabstandet, wobei der Monoblock des Verdichters 400 größtenteils in dem Anschlussabstand untergebracht ist. Aufgrund der modularen Anordnung der vorgenannten Komponenten des Lufttrockners 100 und der Ventilanordnung 300 sind die Funktionalitäten der Trocknerfunktion einerseits und der Drucksteuerfunktion andererseits räumlich getrennt. Die Funktionalitäten lassen sich einzeln bedarfsgerecht auslegen und gegebenenfalls auswechseln und separat durch Auswechseln ändern.

Fig. 2 zeigt in einer beispielhaft aufgeführten konstruktiven Realisierung die Druckluftversorgungsanlage 1000 in einer Aufhängung 700, die auch als Klammer bezeichnet werden kann. Die Aufhängung 700 trägt die elektronische Steuereinrichtung 900, die ausgebildet ist, für den Elektromotor 500 einen den Betriebsstrom IB begrenzenden Schwellstrom IS zeitlich variabel vorzugeben. Im Übrigen weist die Aufhängung 700 ein System von Federlagerungen 710 zum Tragen der Druckluftversorgungsanlage 1000 auf sowie ebenfalls abgefederte Befestigungsanschlüsse 720 zur Anbringung der Aufhängung 700 an einem Bauteil eines Fahrzeugs.

Fig. 3 zeigt einen pneumatischen Schaltplan eines pneumatischen Druckluftversorgungssystems 1002 mit der Druckluftversorgungsanlage 1000 der vorbeschriebenen Art und einer Pneumatikanlage 1001 in Form einer Luftfederanlage. In dem Schaltplan der Druckluftversorgungsanlage 1000 ist auch der Verdichter 400' in einem Gehäusemodul --hier der genannten Aufhängung 700 als Teil der Gehäuseanordnung G-- mit dem Elektromotor 500, dem Kompressor 400 und der Steuereinrichtung 900-- gezeigt. Außerdem ist das Trocknermodul 100' (des Lufttrockners 100), das Boostventilgehäusemodul 330' (mit dem Boostventil 330 und hier auch mit dem Ablassventil in Form des Steuerventils 320) und ein Luftverteilmodul 301' --z. B. in Form eines Flansches 301 an einem Ventilgehäusemodul 310' der Wegeventilanordnung 310, d. h. der über ein Steuerventil 320 in Form eines Magnetventils schaltbaren Wegeventilanordnung 310-- eingezeichnet. Die als Steuereinheit dienende Ventilanordnung 300 lässt sich vergleichsweise einfach über den genannten Flansch 301 an die anderen modularen Einheiten der Druckluftversorgungsanlage 1000 modular assemblierbar anbinden.

Die Druckluftversorgungsanlage 1000 dient zum Betreiben der Pneumatikanlage 1001. Die Druckluftversorgungsanlage 1000 weist dazu eine vorerwähnte Druckluftzuführung 1 und einen Druckluftanschluss 2 zur Pneumatikanlage 1001 auf. Die Druckluftzuführung 1 ist vorliegend mit einer Luftzuführung 0, einem der Luftzuführung 0 vorgeordneten Filterelement 0.1 und einem der Luftzuführung 0 nachgeordneten über den Elektromotor 500 angetriebenen Verdichter 400 --hier ein Doppelluftverdichter mit einer ersten Verdichterstufe 401 und einer zweiten Verdichterstufe 402-- sowie einem Anschluss der Druckluftzuführung 1 gebildet, an den sich in der Pneumatikhauptleitung 200 der Lufttrockner 100 mit dem Trockenbehälter 140 anschließt.

Es kann nur eine Kammer aber auch mehrere Kammern des Lufttrockners 100 vorgesehen sein; z. B. kann eine erste und zweite Kammer des Lufttrockners 100 zur Bildung einer ersten Lufttrocknerstufe und einer zweiten Lufttrocknerstufe in einer Reihenschaltung in der Pneumatikhauptleitung 200 vorgesehen sein. Vorliegend ist die Luftzuführung 0 und ein dieser vorgeordnetes Filterelement 0.1 mit einem Entlüftungsanschluss 3 zusammengelegt.

Gemäß der in Fig. 3 gezeigten Ausführungsform zweigt eine Zweigleitung 230 an der Druckluftzuführung 1 von der Pneumatikhauptleitung 200 ab und führt zu einer Entlüftungsleitung 240 zu einem Entlüftungsanschluss 3 und dem nachgeschalteten Filterelement 0.1. Die Pneumatikhauptleitung 200 ist die einzige pneumatische Leitung der ersten pneumatischen Verbindung, die sich bis zur Pneumatikanlage 1001 mit einer weiteren Pneumatikleitung 600 fortsetzt. Die Pneumatikhauptleitung 200 verbindet pneumatisch die Druckluftzuführung 1 und den Druckluftanschluss 2, wobei in der Pneumatikhauptleitung 200 der Lufttrockner 100 und weiter in Richtung des Druckluftanschlusses 2 ein entsperrbares Rückschlagventil 311 sowie eine erste Drossel 331 angeordnet ist. Zwischen dem pneumatisch entsperrbaren Rückschlagventil 311 und dem Druckluftanschluss 2 ist die erste Drossel 331 angeordnet. Als Teil der Wegeventilanordnung 310 ist --neben dem entsperrbaren Rückschlagventil 311-- ein steuerbares Entlüftungsventil 312 in Reihenschaltung mit einer zweiten Drossel 332 in der Entlüftungsleitung 240 angeordnet. Die Reihenanordnung aus erster Drossel 331 und pneumatisch entsperrbarem Rückschlagventil 311 ist zwischen dem Lufttrockner 100 und dem Druckluftanschluss 2 zur Pneumatikanlage 1001 in der Pneumatikhauptleitung 200 angeordnet. Die Nennweite der zweiten Drossel 332 liegt oberhalb der Nennweite der ersten Drossel 331.

Weiter weist die Druckluftversorgungsanlage 1000 die vorgenannte mit der Pneumatikhauptleitung 200 und dem Entlüftungsanschluss 3 und Filterelement 0.1 und/oder Schalldämpfer pneumatisch verbundene zweite pneumatische Verbindung auf --nämlich die vorerwähnte Entlüftungsleitung 240.

Das Entlüftungsventil 312 ist vorliegend als ein vom pneumatisch entsperrbaren Rückschlagventil 311 separates Wegeventil gebildet und in der durch die Entlüftungsleitung 240 gebildeten zweiten pneumatischen Verbindung angeordnet. Das steuerbare Entlüftungsventil 312 ist als indirekt geschaltetes Relaisventil Teil einer Ventilanordnung 300 mit einem vorerwähnten Steuerventil 320 in Form eines 3/2-Wege-Magnetventils. Das Steuerventil 320 kann mit einem über eine Steuerleitung 321 übermittelbaren Steuersignal in Form eines Spannungs- und/oder Stromsignals an die Spule 322 des Steuerventils 320 angesteuert werden. Bei Ansteuerung kann das Steuerventil 320 von der in Fig. 3 gezeigten stromlosen Stellung in eine pneumatisch geöffnete bestromte Stellung überführt werden; in dieser Stellung ist ein Steuerdruck über eine pneumatische Steuerleitung 250 aus der Pneumatikhauptleitung 200 zur pneumatischen Steuerung des steuerbaren Entlüftungsventils 312 als Relaisventil weitergegeben. In der stromlosen Stellung ist die Pneumaitkhauptleitung 200 mit dem entsperrbaren Rückschlagventil 311 geschlossen. Das steuerbare Entlüftungsventil 312 ist vorliegend zusätzlich mit einer Druckbegrenzung 313 versehen. Die Druckbegrenzung 313 greift über eine pneumatische Steuerleitung vor dem Entlüftungsventil 312 --konkret zwischen Zweigleitung 230 und Entlüftungsventil 312-- einen Druck ab, welcher bei Übersteigen eines Schwelldrucks den Kolben 314 des Entlüftungsventils 312 gegen die Kraft einer einstellbaren Feder 315 vom Ventilsitz abhebt --also das steuerbare Entlüftungsventil 312 auch ohne Ansteuerung über das Steuerventil 320 in die geöffnete Stellung bringt. Auf diese Weise wird vermieden, dass ein ungewollt zu hoher Druck im pneumatischen System 1000 entsteht.

Das Steuerventil 320 trennt im vorliegend geschlossenen Zustand die Steuerleitung 250 und ist über eine weitere Entlüftungsleitung 260 mit der Entlüftungsleitung 240 zum Entlüftungsanschluss 3 pneumatisch verbunden. Mit anderen Worten ist ein zwischen Wegeventilanordnung 310 --insbesondere Entlüftungsventil 312-- und Steuerventil 320 liegender Leitungsabschnitt 251 der Steuerleitung 250 bei der in Fig. 3 gezeigten geschlossenen Stellung des Steuerventils 320 mit der weiteren Entlüftungsleitung 260 zwischen Steuerventil 320 und Entlüftungsanschluss 3 verbunden. Die weitere Entlüftungsleitung 260 schließt dazu im weiteren Zweiganschluss 261 an die weitere Entlüftungsleitung 240 an. Die Zweigleitung 230 und die weitere Entlüftungsleitung 240 führt über den Zweiganschluss 261 zum Entlüftungsanschluss 3.

Über das Steuerventil 320 kann bei am Druckluftsanschluss 2 anstehenden Steuerdrucks --insbesondere eines von der Pneumatikhauptleitung 200 oder von der weiteren Pneumatikleitung 600 über die pneumatische Steuerleitung 250 abgeleiteten Steuerdrucks-- das Entlüftungsventil 312 unter Druckbeaufschlagung des Kolbens 314 geöffnet werden. Das Überführen des Steuerventils 320 in den geöffneten Zustand führt nicht nur zum Öffnen des Entlüftungsventils 312, sondern auch zum Entsperren des entsperrbaren Rückschlagventils 311. Mit anderen Worten dient das Steuerventil 320 der Magnetventilanordnung 300 zur Ansteuerung des separat vom Rückschlagventil 311 vorgesehenen Entlüftungsventils 312 als auch des Rückschlagventils 311. Dies führt zu einem beidseitigen pneumatischen Öffnen des Lufttrockners 100 bei Überführung des Steuerventils 320 in die geöffnete Stellung. Diese weitere durch die Druckluftversorgungsanlage 1000 einnehmbare Betriebsstellung kann im Betrieb zum Entlüften der Pneumatikanlage 1001 und gleichzeitig zum Regenerieren der Lufttrockner 100 genutzt werden. Die in Fig. 3 gezeigte Betriebsstellung der Druckluftversorgungsanlage 1000 dient unter Durchfluss des Rückschlagventils 311 in Durchlassrichtung vor allem zum Befüllen der Pneumatikanlage 1001 über die Pneumatikhauptleitung 200 sowie die weitere Pneumatikleitung 600.

Die Pneumatikanlage 1001 der Fig. 3 in Form einer Luftfederanlage weist in diesem Fall eine Anzahl von vier sogenannten Bälgen 1011, 1012, 1013, 1014 auf, die jeweils einem Rad eines nicht näher dargestellten PKW-Fahrzeugs zugeordnet sind und eine Luftfeder des Fahrzeugs bilden. Des Weiteren weist die Luftfederanlage einen Speicher 1015 zur Speicherung schnellverfügbarer Druckluft für die Bälge 1011, 1012, 1013, 1014 auf. Jenen Bälgen 1011 bis 1014 sind in jeweils einer von einer Galerie 610 abgehenden Federzweigleitung 601, 602, 603, 604 jeweils ein Magnetventil 1111, 1112, 1113, 1114 vorgeordnet, welches jeweils als Niveauregelventil zum Öffnen oder Schließen einer mit einem Balg 1011 bis 1014 gebildeten Luftfeder dient. Die Magnetventile 1111 bis 1114 in den Federzweigleitungen 601 bis 604 sind als 2/2-Wegeventile ausgebildet. Einem Speicher 1015 ist in einer Speicherzweigleitung 605 ein Magnetventil 1115 in Form eines weiteren 2/2-Wegeventils als Speicherventil vorgeordnet. Die Magnetventile 1011 bis 1014 sind mittels der Feder- und Speicherzweigleitungen 601 bis 604 bzw. 605 an eine gemeinsame Sammelleitung, nämlich die vorbezeichnete Galerie 610 und dann an die weitere Pneumatikleitung 600, angeschlossen. Die Galerie 610 ist so über die Pneumatikleitung 600 an den Druckluftanschluss 2 der Druckluftversorgungsanlage 1000 pneumatisch angeschlossen. Vorliegend sind die Magnetventile 1111 bis 1115 in einem Ventilblock 1010 mit fünf Ventilen angeordnet. Die Magnetventile sind in Fig. 2 in einem stromlosen Zustand gezeigt - dabei sind die Magnetventile 1111 bis 1115 als stromlos geschlossene Magnetventile gebildet. Andere, hier nicht gezeigte abgewandelte Ausführungsformen können eine andere Anordnung der Magnetventile realisieren - es können auch weniger Magnetventile im Rahmen des Ventilblocks 1010 genutzt werden.

Zum Befüllen der Pneumatikanlage 1001 werden die den Bälgen 1011 bis 1014 vorgeordneten Magnetventile 1111 bis 1114 und/oder das dem Speicher 1015 vorgeordnete Magnetventil 1115 in eine geöffnete Stellung gebracht. Gleichwohl ist bei geöffneter (und auch geschlossener) Stellung der Magnetventile 1111 bis 1114 bzw. 1115 in der Pneumatikanlage 1001 --aufgrund des vorliegend nicht entsperrten Rückschlagventils 311-- auch eine Betriebsstellung der Pneumatikanlage 1001 entkoppelt von der Druckluftversorgungsanlage 1000 möglich. Mit anderen Worten können bei geschlossenem Rückschlagventil 311 die Magnetventile 1111 bis 1114 beliebig geöffnet und geschlossen werden sodass ein unabhängiger Betrieb der Pneumatikanlage 1001 möglich ist. Insbesondere kann ein Querschalten von Bälgen 1011 bis 1015 (z. B. im Off-Road-Betrieb eines Fahrzeugs) ein Befüllen der Bälge 1011 bis 1015 aus dem Speicher 1015 oder eine Druckmessung in der Pneumatikanlage 1001 über die Galerie 610 vorgenommen werden, ohne dass die Druckluftversorgungsanlage 1000 druckbeaufschlagt wird. Insbesondere wird der Lufttrockner 100 aufgrund des vom Druckluftanschluss 2 zur Druckluftzuführung 1 gesperrten Rückschlagventils 311 und des geschlossenen Steuerventils 320 vor unnötiger Beaufschlagung mit Druckluft geschützt. In vorteilhafter Weise ist eine Beaufschlagung der Lufttrockner 100 mit Druckluft nicht bei jeder Betriebsstellung der Pneumatikanlage 1001 vorteilhaft. Vielmehr ist es für eine effektive und schnelle Regeneration der Lufttrocknernanlage 100 vorteilhaft, wenn diese ausschließlich im Falle einer Entlüftung der Pneumatikanlage 1001 vom Druckluftanschluss 2 zur Druckluftzuführung 1 vorgenommen wird; dann mit entsperrtem Rückschlagventil 311. Dazu wird --wie oben erläutert-- das Steuerventil 320 in eine geöffnete Schaltstellung gebracht, so dass sowohl das Entlüftungsventil 312 geöffnet als auch das Rückschlagventil 311 entsperrt wird. Eine Entlüftung der Pneumatikanlage 1001 kann über die erste Drossel 331, das entsperrte Rückschlagventil 311 unter Regeneration der Lufttrockner 100 sowie anschließend über die zweite Drossel 332 und das geöffnete Entlüftungsventil 312 zum Entlüftungsanschluss 3 erfolgen. Anders ausgedrückt ist zur gleichzeitigen entsperrten Betätigung des Rückschlagventils 311 und zum öffnenden Betätigen des Entlüftungsventils 312 ein vom Steuerventil 320 pneumatisch ansteuerbarer Steuerkolben 314 vorgesehen, der z. B. als gestufter Relaiskolben ausgeführt sein kann.

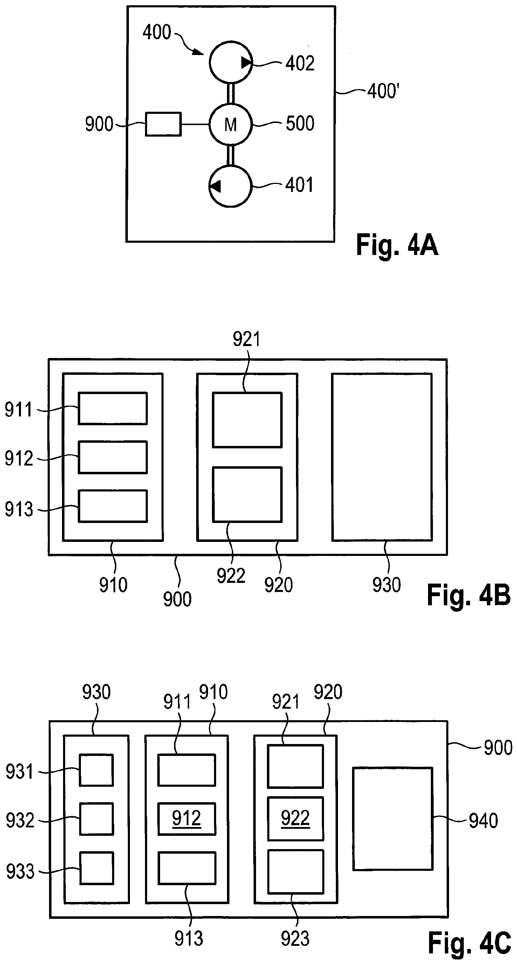

Fig. 4 zeigt in einem Schema der Ansicht (A) den zwei stufigen Kompressor 400 mit einer ersten Verdichterstufe 401 und einer zweiten Verdichterstufe 402 sowie den Elektromotor 500 zur Bildung eines Verdichters 400'. Wie aus Ansicht (B) der Fig. 4 ersichtlich ist, wird der Elektromotor 500 über eine in Fig. 3 erstmals gezeigte Steuereinrichtung 900 betrieben, die ein elektronisches Steuermodul 910 mit einem Steuerbaustein 911 in Form eines Mikrocontrollers und ein Programmmodul 912 mit einem ausführbaren Computerprogramm-Produkt aufweist. Das Programmmodul kann in einem Speicher 913 des Steuermoduls 910 hinterlegt sein. Die Steuereinrichtung 900 weist darüber hinaus ein Regelmodul 920 mit einer ersten Regeleinheit 921 zur Regelung eines Betriebsstroms und einer zweiten Regeleinheit 922 zur Regelung einer Drehzahl des Kompressor-Motors M auf. Weiter weist die Steuereinrichtung 900 eine Analyseeinheit 930 auf, die ausgebildet ist, eine Ist-Drehzahl nK-IST des Kompressormotors M bzw. des Kompressors 400 aus einem zeitlichen Verlauf eines Betriebsstroms des Elektromotors 500 zu ermitteln.

Die vorgenannte beispielhafte Aufzählung von Einheiten und Modulen einer Steuereinrichtung 900 ist insbesondere nicht abschließend; vielmehr kann die Steuereinrichtung 900 weitere Steuer-, Regel- und Analyse-Einheiten aufweisen, die zur Steuerung und/oder Regelung des Kompressors 400, insbesondere des Kompressormotors M, zweckmäßig sind. Darüber hinaus ist eine in Fig. 4(B) gezeigte Gruppierung von Modulen und Einheiten lediglich beispielhaft und zur Veranschaulichung des Prinzips einer Steuer- und Regeleinheit 900 gemeint.

Eine andere beispielhafte Variante einer Steuer- und Regeleinrichtung 900' ist in Fig. 4(C) gezeigt. Diese weist, ähnlich wie bereits die Steuer- und Regeleinrichtung 900 der Fig. 4(B), das vorgenannten Steuermodul 910 mit einem Steuerbaustein 911, wie einen Mikrokontroller oder dergleichen, eine Programmodul 912 und einen Speicher 913 auf. Darüber hinaus sieht ein Regelmodul 920 der Steuer- und Regeleinrichtung 900' eine Regeleinheit 921 für die Anlaufphase des Kompressormotors M vor. Insbesondere ist die Regeleinheit 921 ausgebildet, den Anlaufstrom des Betriebsstroms IB, d. h. den Betriebsstrom IB in der Anlaufphase AnP, zu regeln. Weiter weist das Regelmodul 920 eine Regeleinheit 922 für die Lastphase LaP auf. Insbesondere ist die Regeleinheit 922 ausgebildet, eine Drehzahl nK des Kompressormotors M zu regeln. Weiter weist das Regelmodul 920 eine Regeleinheit 923 für eine Auslauf- oder Ausschaltphase AusP des Kompressorsmotors M auf. Insbesondere ist die Regeleinheit 923 ausgebildet, einen Ausschaltstrom des Betriebsstroms IB, d. h. einen Betriebsstrom IB in der Ausschaltphase AusP, zu regeln.

Die Analyseeinheit 930 ist darüber hinaus zur Erfassung von IST-Werten von Parametern des Kompressormotors M ausgelegt. Insbesondere weist die Analyseeinheit 930 ein Eingangsmodul 931 auf, welches ausgebildet ist, eine IST-Wertanforderung an den Kompressormotor M umzusetzen. Ein weiteres Eingangsmodul 932 ist ausgebildet, einen IST-Wert des Betriebsstrom IB des Kompressormotors M zu empfangen. Ein weiteres Eingangsmodul 933 ist ausgebildet, einen Wert der Betriebsspannung des Kompressormotors M, insbesondere einen IST-Wert der Betriebsspannung UB, zu empfangen.
Weiter weist die Steuer- und Regeleinheit 900' der Fig. 4(C) eine Schalteinheit 940 zur Umsetzung einer Aktuatorik auf; die Einheit 940 kann dazu eine geeignete Anzahl von Halbleiterschaltern aufweisen. Insbesondere ein vorgenannter Steuerbaustein 911 in Form eines Mikrokontrollers und/oder Halbleiterschalter der Aktuatorik können auf Basis eines oder mehrerer MOSFET-Bausteine gebildet sein.

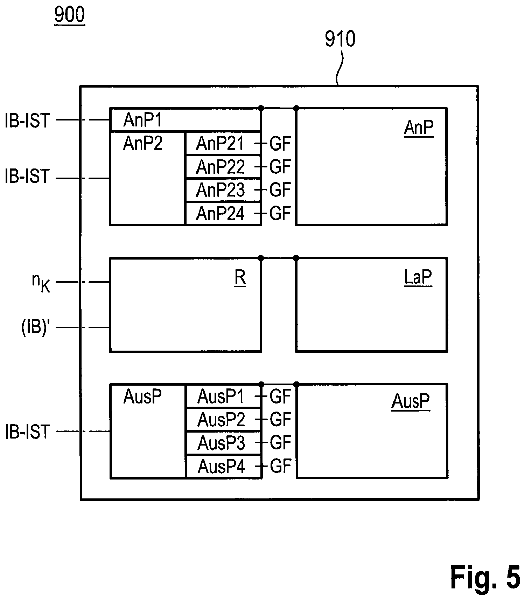

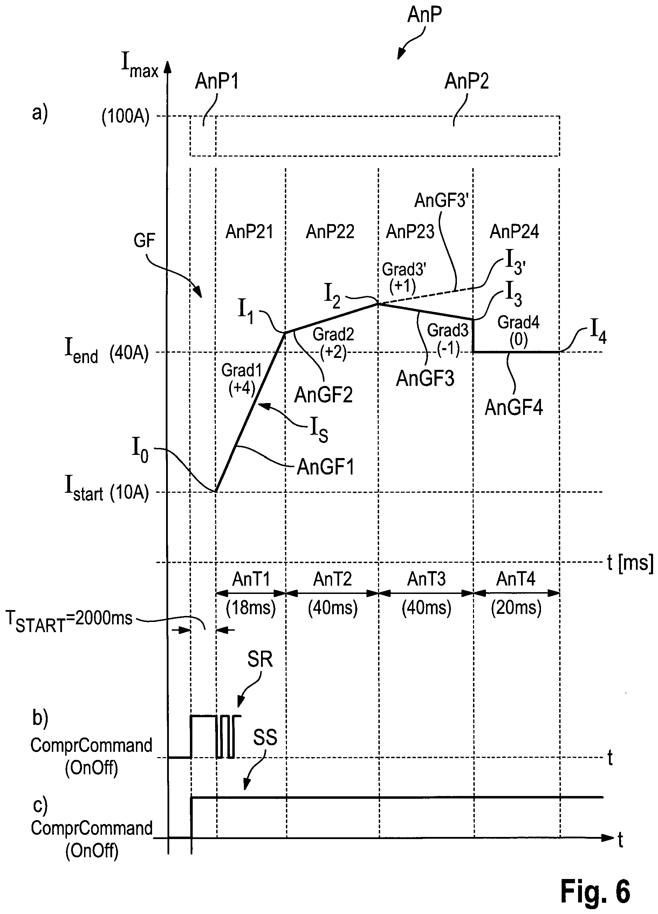

Fig. 5 zeigt darüber hinaus die Funktionalität der elektronischen Steuer- und/oder Regeleinrichtung 900, 900' in symbolischer Form. Die Funktionalität der Steuer- und/oder Regeleinrichtung 900, 900' ist im Wesentlichen in dem Steuermodul 910 (das vor allem Funktionalitäten des Steuerbausteins 911 und des ausführbaren Programmmoduls 912 zusammenbringt) und der Analyseeinheit 930 integriert, gegebenenfalls unter Mitwirkung des Regelmoduls 920. Die Funktionalität der Steuereinrichtung 910, wie sie zur Ausführung auf dem Steuerbaustein 911 implementiert ist, weist im Wesentlichen drei Kategorien auf; nämlich eine Funktionalität für eine Anlaufphase AnP, eine Lastphase LaP und eine Ausschaltphase AusP. In der Anlaufphase AnP wird eine erste Funktionalität des Steuermoduls 910 für eine zeitlich begrenzte erste Zeitphase AnP1 und eine zeitlich begrenzte zweite Zeitphase AnP2 zur Verfügung gestellt; in der zweiten Zeitphase AnP2 gibt es vorliegend vier Anlaufzeitabschnitte AnP21, AnP22, AnP23 und AnP24, in denen unterschiedliche Anlaufschwellstrom-Grenzfunktionen GF --nämlich AnGF1, AnGF2, AnGF3, AnGF4 der Fig. 6 jeweils für einen Anlaufzeitabschnitt AnP21, AnP22, AnP23 und AnP24-- zur Verfügung gestellt wird.

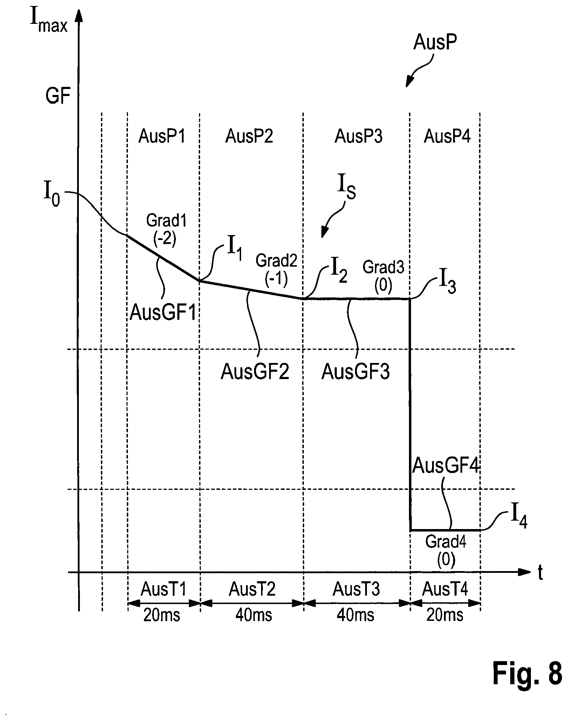

In der Ausschaltphase AusP gibt es eine Funktionalität für einen Ausschaltschwellstrom in der Ausschaltphase AusP über unterschiedliche Ausschalt-Grenzfunktionen GF --nämlich Ausschalt-Grenzfunktionen AusGF1, AusGF2, AusGF3, AusGF4 der Fig. 8 für vorliegend vier unterschiedliche Ausschaltzeitabschnitte AusP1, AusP2, AusP3, AusP4. Während der Anlaufphasen AnP1, AnP2 und der Ausschaltphase AusP wird ein Betriebsstrom IB als IST-Wert über eine Analyseeinheit 930 zur Verfügung gestellt. Es wird auch den jeweils vier Zeitabschnitten --d. h. Anlaufzeitabschnitten AnP21, AnP22, AnP23 und AnP24 und Ausschaltzeitabschnitten AusP1, AusP2, AusP3, AusP4-- jeweils eine Schwellstrom-Grenzfunktionen GF aus dem Programmmodul 912 bzw. dem Speicher 913 zugeordnet. Diese werden anhand der weiteren Fig. 6 bis Fig. 8 erläutert, in deren Diagramme die in Fig. 4 und Fig. 5 aufgeführten Bezeichnungen übernommen sind.

Gemäß Fig. 6(A) sind jedem der Anlaufzeitabschnitte AnP21, AnP22, AnP23, AnP24 jeweils eine lineare Anlaufschwellstrom-Grenzfunktion GF, d. h. AnGF1 bis AnGF4, zugeordnet. Die Anlaufschwellstrom-Grenzfunktionen AnGF1, AnGF2, AnGF3 und AnGF4 lassen sich jeweils über eine Steigung Grad1, Grad2, Grad3, Grad4 (hier +4, +2, -1 oder +1, +/-0) sowie eine Verweilzeit AnT1, AnT2, AnT3, AnT4 im Anlaufzeitabschnitt bestimmen. Unter Vorgabe eines Startstroms I-START und eines Endstroms I-END mit entsprechenden Stützstellen I0, I1, I2, I3 und I4 mit 0 = I-START und I4 = I-END ist der Gesamtverlauf einer Anlaufschwellstrom-Grenzfunktion GF über die gesamte zweite Zeitphase AnP2 einer Anlaufphase AnP festgelegt. Grundsätzlich kann natürlich die vorliegend beispielhaft verdeutlichte Zahl von n=4 Anlaufzeitabschnitten nach Bedarf erniedrigt oder bevorzugt erhöht werden, insbesondere auf eine Zahl n=5 oder unter Anlaufzeitabschnitten AnP2i (i=1..n) mit z. B. jeweils 25 ms Dauer. Jeweils der letzte Anlaufzeitabschnitt der Nummer n dient zum Übergang auf eine dauerhafte Einschaltung. Auch der konkrete Verlauf kann bedarfsmäßig angepasst sein, wie beispielsweise die Alternativen zu Grad3 zeigen. Die gesamte erste Zeitphase AnP1 einer Anlaufphase AnP hat keine Strombegrenzung bzw. eine Anlaufschwellstrom-Grenzfunktionen GF geht dort gegen Unendlich.

Gemäß Fig. 6(B) kann über eine symbolisch dargestellte Sampling-Rate oder einen Halbleiterschalter-Taktzyklus SR, insbesondere MOSFET-Taktzyklus, eine Abtastung des Kompressor-Betriebszustands erfolgen; dies kann in ein dementsprechendes Tastsignal einer Sampling-Einheit eingebracht werden. Im Falle, dass der Betriebsstrom IB den Schwellstrom IS erreicht, bzw. im vorliegenden Fall überschreitet, gilt die Maßgabe, dass der Betrieb des Kompressors durch Unterbrechen der Betriebsspannung des Elektromotors 500 unterbrochen wird. Diese Zeitpunkte können aus der Steuersignalisierung zur Unterbrechung der Betriebsspannung UB genutzt werden. Es können aber auch beliebige Zeitpunkte durch einen Mikrokontroller 911 vorgegeben bzw. durch einen Schalter umgesetzt werden. In Fig. 6(C) ist ein Signal SS kenntlich gemacht, das am Kompressor-Motor M Betriebsparameter der vorgenannten Art anfordert; nämlich insbesondere einen Kompressor-Betriebsstrom und/oder eine Kompressor-Betriebsspannung.

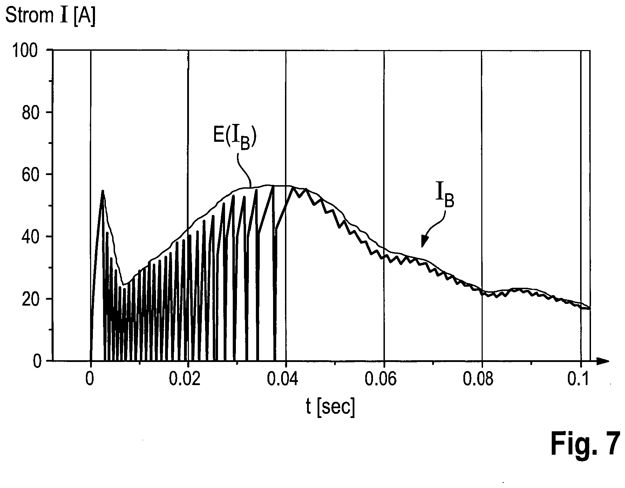

Im Ergebnis ergibt sich nach Fig. 7 ein Betriebsstrom IB, der sich als nicht kontinuierlicher Verlauf von Betriebsstrom-Abschnitten ergibt. Eine die Spitzen des Betriebsstroms IB verbindende Enveloppe E(IB) zeichnet sich dadurch aus, dass sie unterhalb der durch die Anlaufschwellstrom-Grenzfunktion GF von Schwellströmen IS vorgegebenen Maximalwerte und Gradienten Grad1, Grad2, Grad3, Grad4 liegt. Der Betriebsstrom IB des Elektromotors 500 wird somit zielgenau im Rahmen des zuvor erläuterten Verfahrens geführt, so dass sich eine sichere strombegrenzte Anlaufphase AnP des Elektromotors ohne Leistungseinbuße realisieren lässt - dies im Unterschied zum Betriebsstrom IB der Fig. 1.

Anders ausgedrückt kann das zuvor erläuterte Verfahren zur Begrenzung des Anlaufstroms auch als eine Stromregelung aufgefasst werden, bei welcher der Anlaufstrom-Peak und der Anlaufstrom-Gradient so reduziert werden, dass der Betriebsstrom IB unterhalb der Enveloppe E(IB) bleibt, die im Wesentlichen durch die zuvor erläuterten Grenzfunktionen GF vorgegeben ist. Die betrachtete bzw. vom Kompressor-Sanft-Anlauf (CSS) beeinflusste Kompressor-Startphase unterteilt sich also in eine erste Zeitphase AnP1, in der keine Strombegrenzung stattfindet und in eine zweite Zeitphase AnP2, in der --wie beschrieben-- eine zeitlich variable Strombegrenzung stattfindet. Diese beiden Zeitphasen AnP1, AnP2 können --wie vorliegend die zweite Zeitphase AnP2-- wiederum in mehrere Anlauf-Zeitabschnitte AnP2-1234 aufgeteilt werden, die eine bessere Anpassbarkeit an den Kompressormotor sicherstellen sollte.

Betreffend die erste Zeitphase AnP1 ist festzustellen, dass die kritischen Teile des Einschaltvorgangs tatsächlich die ersten Unterphasen der ersten Zeitphase betreffen, weil einerseits der Kompressorstrom schon in diesen Unterphasen begrenzt werden muss und andererseits ein sicherer Kompressoranlauf gewährleistet sein muss. Für die Gewährleistung eines sicheren Kompressoranlaufs muss nämlich ein Anlaufmoment überschritten werden. Dieses Anlaufmoment ist abhängig von der Konstruktion und der Vorgeschichte des Betriebs des Kompressors K, wie zum Beispiel einem Druck pK innerhalb der Kompressorzuleitungen, einem aktuellen Drehwinkel des Elektromotors etc. Wenn das Anlaufmoment nicht überschritten wird, dann kann es noch während des Anlaufvorganges --insbesondere während einer ersten zeitlich begrenzten Zeitphase AnP1-- zu einem Festsitzen des Kompressors kommen. In diesem Fall läuft der Kompressor erst gar nicht an und der Elektromotor zieht dann einen unzulässig hohen Betriebsstrom. Dieser kritische Fall des festsitzenden Elektromotors 500 des Kompressors 400 kann bei niedrigen Versorgungsspannungen mit höherer Wahrscheinlichkeit auftreten als bei höheren Versorgungsspannungen. Um ein Festsitzen des Kompressors K, d. h. des Elektromotors 500 am Kompressor 400 des Verdichters 400', zu verhindern, wird also in der ersten Zeitphase AnP1 eine von der gemessenen Versorgungsspannung abhängige Kompressoransteuerung berechnet und eingestellt. Dabei werden die ersten Ansteuerungsphasen in der zeitlich begrenzten ersten Zeitphase AnP1 mit Mindestansteuerungszeiten versehen. Die Mindestansteuerungszeiten werden in Abhängigkeit von der gemessenen Spannung eingestellt. Eine niedrige Spannung bewirkt beispielsweise längere Mindestansteuerungszeiten. Eine direkte Begrenzung des Kompressorstroms findet in der ersten Zeitphase AnP1 also nicht statt. Vielmehr ergibt sich eine indirekte Begrenzung aus der resultierenden Ansteuerungsdauer in der zeitlich begrenzten ersten Zeitphase AnP1, nämlich vorliegend über die in Fig. 6 dargestellte Zeit T-START (hier 2000 μs) als Mindeststeuerungszeit in Abhängigkeit von der gemessenen Spannung.

Betreffend die zweite Zeitphase AnP2 liegt die bereits erläuterte variable Strombegrenzung mittels der Anlauf-Schwellstrom-Grenzfunktion GF zur Darstellung des Schwellstroms IS vor. Die geeignete Sampling-Rate SR in der zweiten Zeitphase AnP2 kann geeignet gesetzt werden in der zweiten Zeitphase AnP2 im Unterschied zur erste Zeitphase AnP1. Überschreitet dabei der aktuell gemessene Kompressorstrom, d. h. Betriebsstrom IB, einen vorgegebenen Schwellstrom der AnlaufSchwellstrom-Grenzfunktion GF IS AnGF1, AnGF2, AnGF3, AnGF4, wird mit Hilfe eines Halbleiterschalters die am Kompressor anliegende Betriebsspannung UB unterbrochen. Nach kurzer Ausschaltzeit - dargestellt entsprechend den Einbrüchen des Betriebsstroms IB in Fig. 7 - wird die Betriebsspannung UB wieder eingeschaltet, um nach Überschreiten des nächsten höheren Stromschwellwertes IS gemäß dem ansteigenden Verlauf der Anlaufgrenzfunktionen AnGF1, AnGF2, AnGF3, AnGF4 wieder zu unterbrechen. Damit wird der zulässige Betriebsstrom IB als Kompressorstrom von einem Startwerk IStart bis zu einem Endwert IEnd gemäß der AnlaufSchwellstrom-Grenzfunktion GF, die als Linie die Stützstellen I0 bis I4 verbindet, dargestellt. Der zeitliche Verlauf des zulässigen Kompressor-Stroms als Betriebsstrom IB im zweiten Abschnitt wird zum Beispiel über vier lineare Bereiche bzw. vier Unterphasen mit Verweilzeiten AnT1 bis AnT2 vorgegeben. Nach Ablauf der letzten Unterphase (hier Anlaufzeitabschnitt AnP24 mit der Verweilzeit AnT4) wird die Kompressorstartphase verlassen und in die Kompressorlaufphase gewechselt, die vorliegend als Lastphase LaP bezeichnet ist. Dieser Wechsel steht unabhängig vom gemessenen Betriebsstrom IB vom angesteuerten Taktverhältnis der Sampling-Rate, d. h. unabhängig vom PWM-Signal für den letzten Anlaufzeitabschnitt AnP24.

Wie aus Fig. 8 ersichtlich ist, kann auch ein Abschaltstromgradient durch eine ähnliche Stromregelung reduziert werden. Unterschreitet der aktuell gemessene Kompressorstrom (IST-Wert des Betriebsstroms IB-IST) einen vorgegebenen Grenzwert (Schwellstrom des Betriebsstroms IS=SOLL-Wert des Betriebsstroms IS-SOLL), wird mit Hilfe des Halbleiterschalters die Kompressorversorgungsspannung wieder eingeschaltet. Nach kurzer Einschaltzeit wird die Betriebsspannung UB wieder ausgeschaltet, um nach Unterschreiten des nächsten kleineren Grenzwertes wieder eingeschaltet zu werden. Damit wird der Betriebsstrom IB des Kompressors langsam reduziert. In der Kompressor-Ausschaltphase wird gemäß dieser Ausführungsform immer der Kompressorstrom geregelt.

Fig. 8 zeigt dazu analog dem oberen Teil der Fig. 6 den Verlauf eines Ausschaltschwellstroms in der Ausschaltphase AusP, der sich ergibt aus dem Gesamtverlauf des Schwellstroms IS entlang von vorliegend vier AusschaltSchwellstrom-Grenzfunktionen GF, nämlich AusGF1, AusGF2, AusGF3 und AusGF4 entlang der Stützstellen I0, I1, I2, I3 und I4, wobei I0 einem beliebigen Startstrom I-START und I4 einem beliebigen Endstrom I-END entspricht und wobei wieder Grad1, Grad2, Grad3, Grad4 (hier -2, -1, +/-0, +/-0) die Steigungen der AusschaltSchwellstrom-Grenzfunktionen AusGF1, AusGF2, AusGF3 und AusGF4 angeben. Grundsätzlich kann natürlich die vorliegend beispielhaft verdeutlichte Zahl von n=4 Ausschaltzeitabschnitten AusPi (i=1..n) nach Bedarf erniedrigt oder bevorzugt erhöht werden, insbesondere auf eine Zahl von z. B. n=9 oder mehr Auslaufzeitabschnitten mit z. B. jeweils 25 ms Dauer. Jeweils der letzte Auslaufzeitabschnitt der Nummer n dient zum Übergang auf eine dauerhafte Ausschaltung. Wichtig dabei ist, dass der Endstrom --hier I4-- ausreichend niedrig ist, insbesondere annähernd Null ist oder auf Null geht, und der Startstrom I0 in einem nominellen Bereich liegt. Die einzelnen Ausschaltschwellstrom-Grenzfunktionen GF sind über die Verweilzeiten AusT1 bis AusT4 der Ausschaltzeitabschnitte AusP1 bis AusP4 bestimmt. So kann ohne Überschreiten eines maximalen Gradienten oder Peaks eines Betriebsstroms der Betriebsstrom IB unterhalb des Schwellstroms IS gehalten werden und entlang einer zielgenau definierten Rampe heruntergefahren werden. Der tatsächliche Verlauf eines Betriebsstroms ergibt sich analog zu dem Beispiel der Fig. 7 mit einer unterbrochenen Stromfunktion, deren Peaks unterhalb der Enveloppe bleibt. Ein Verhalten eines Ausschaltbetriebsstroms IB liegt dementsprechend unterhalb der Ausschaltschwellstrom-Grenzfunktion GF der Fig. 8 mit Schwellströmen IS.

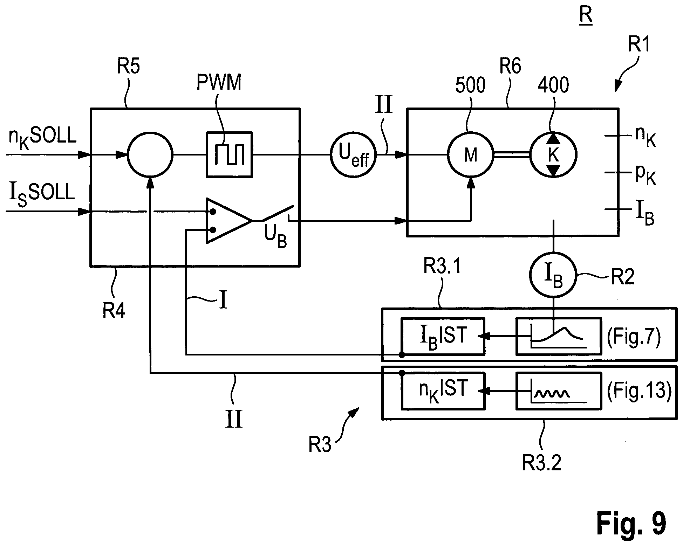

Fig. 9 zeigt für die Funktionalität in einer Lastphase LaP die Wirkungsweise eines Regelmoduls 920 zur Umsetzung einer nachfolgend erläuterten Regelschleife R für den Kompressor-Motor M für den nachfolgend auch die Abkürzung K gewählt ist; konkret einer Regeleinheit 922 der Steuer- und Regeleinheit 900 und/oder 900', die ausgebildet ist, eine Drehzahl nK des Elektromotors 500 zu regeln, unter Vorgabe einer Drehzahlobergrenze nK-SOLL, nämlich einer bereichsweise konstanten Drehzahlobergrenze nK-SOLL als Funktion des Betriebsstroms IB.

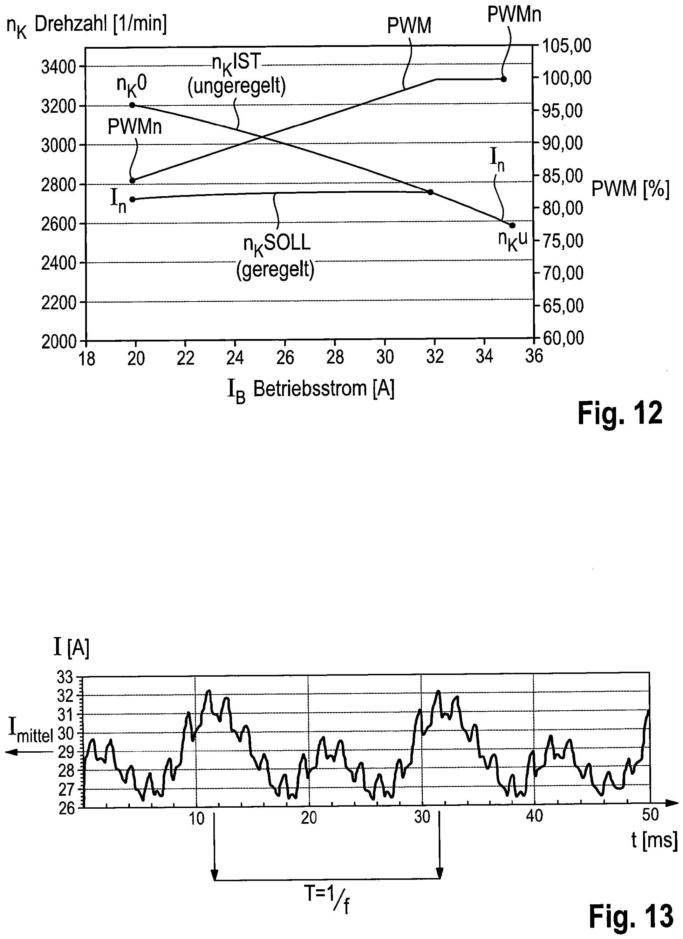

Gemäß Regelschritt R1 der Regelschleife R hat im Betrieb der Verdichter mit Kompressor K und Elektromotor M Werte für die Kompressordrehzahl nK, einen Kompressorgegendruck pK und einen Betriebsstrom IB für den Elektromotor. Über die in Fig. 5 dargestellte Analyseeinheit 930 wird der Betriebsstrom IB gemessen gemäß Regelschritt R2 der Regelschleife. In einem dritten Regelschritt R3 gibt es zwei Möglichkeiten, die allein oder in Kombination verwendbar sind. In einer ersten Möglichkeit eines dritten Regelschritt R3.1 wird aus dem gemessenen Betriebsstrom IB zunächst ein IST-Wert für den Betriebsstrom IB-IST ermittelt und in einen zweiten Zweig II der Regelschleife gegeben. In einer zweiten Möglichkeit eines dritten Regelschritt R3.2 wird unter Nutzung einer ersten Ableitung (IB)' des Betriebsstrom IB --nämlich konkret aus der Frequenz der Stromwelligkeit, wie sie in Fig. 13 gezeigt ist-- ein IST-Wert für eine Drehzahl des Kompressors nK-IST ermittelt und in einen zweiten Zweig II der Regelschleife gegeben.

In einem vierten Regelschritt R4 eines ersten Zweigs der Regelschleife R wird der IST-Wert des Betriebsstroms IB-IST zusammen mit einem Schwellstrom IS als SOLL-Wert (IS-SOLL) einem Komparator zugeführt. Dieser wiederum unterbricht nach dem anhand von Fig. 4 bis Fig. 8 erläuterten Vorgehen die Betriebsspannung UB und/oder den Betriebsstrom IB oder eine sonstige Betriebsenergieversorgung für den als Elektromotor ausgebildeten Kompressor-MotorM (bzw. 500), um den tatsächlichen Betriebsstrom IB unterhalb des Schwellstrom IS-SOLL zu halten; abhängig von der Phase des Betriebs greifen dann unterschiedliche Regelmechanismen. In einer Anlaufphase AnP greift eine Stromregelung der vorgenannten Art, insbesondere unter Einbeziehung der ersten Möglichkeit eines dritten Regelschritt R3.1. In einer Lastphase LaP greift eine Drehzahlregelung der zweiten Möglichkeit eines dritten Regelschritt R3.2 und unter Nutzung der PWM im Regelschritt R5. Der Wert der IST-Drehzahl nK-IST wiederum wird --zusammen mit einer SOLL-Drehzahl nK-SOLL - im Nachgang zum Regelschritt R3 im Regelschritt R5 der Regelschleife R genutzt, um als Funktion des Betriebsstroms ein PWM-Signal PWM zu generieren, das letztlich eine effektive Spannung Ueff für den Elektromotor 500 vorgibt.

Dazu zeigt Fig. 10 den funktionalen Zusammenhang zwischen einer hier Tiefpass-gefilterten (z. B. als gleitender Mittelwert des echten Betriebstroms) Stromaufnahme, d. h. eines Betriebsstromes IB, einerseits und einer Drehzahl nK als linear abfallende Kennlinie für einen zweistufigen Kompressor 400 zusammen mit einem linearen Fit L(nK). Dieser funktionale Zusammenhang einer linear abfallenden Kennlinie kommt letztlich aufgrund des in Fig. 11 dargestellten funktionalen Zusammenhangs zwischen Stromaufnahme, d. h. hier Betriebstromes IB, und Gegendruck pK zustande, der bei einem Befüllvorgang im Betrieb des Kompressors steigt.

Fig. 12 zeigt nochmals die in Fig. 10 dargestellte Funktion eines IST-Wertes der Drehzahl nK, d. h. mit ihrem ungeregelten Wert nK-IST, und die gegenläufiged. h. mit betragsmäßiger gleicher, aber mit umgekehrten Vorzeichen behafteter Steigung-- PWM-Kennlinie PWM zur Steuerung einer effektiven Betriebsspannung des Elektromotors M. Vorliegend wird der PWM-Wert zwischen etwa 85 % bei niedrigem Strom (20 A) und 100 % bei hohem Strom (32 A).

Aufgrund der in Fig. 10 und Fig. 11 dargestellten Abhängigkeiten stellt sich dann tatsächlich ein SOLL-Wert nK-SOLL der Drehzahl nK --d. h. hier ein geregelter Wert einer Soll-Drehzahl nK-SOLL-- ein, die über weite Strecken des Betriebsstroms IB konstant ist. Anders ausgedrückt wird die fallende Abhängigkeit von nK-IST durch die steigende Kennlinie PWM des PWM-Signals zur Steuerung einer Effektivbetriebsspannung kompensiert. Insgesamt ergibt sich dann eine Drehzahlregelung gemäß Regelschritt R6 durch eine PWM-Ansteuerung entlang des zweiten Zweigs II der Regelschleife R ausgehend von dem erläuterten Regelschritt R3, R5, R6.

Fig. 13 zeigt ergänzend noch die Kalibrierung der nicht geregelten Kennung durch Messung von Stromaufnahme und zugehöriger Drehzahl zur Reduzierung der Toleranzen. Dabei erfolgt eine Ermittlung der Drehzahl nK aus der Frequenz der Stromwelligkeit erster Ordnung, die sich aus den Verdichtungs- und Ansaugphasen des Kompressors ergeben. Die Fig. 13 zeigt dazu den Stromverlauf bei laufendem Kompressor mit einer periodisch wiederkehrenden Anzahl von Peaks, deren Frequenz im Wesentlichen die Drehzahl des Kompressors zu ermitteln gestattet.

Anhand von Fig. 13 ist eine Möglichkeit einer Kompressordrehzahl-Ermittlung als Frequenz f im Rahmen einer Peak-to-Peak Analyse dargestellt, wobei letztere zunächst eine Periodendauer T liefert; die Periodendauer T liefert als Umkehrwert die Frequenz f als Maß für die Drehzahl nK des Kompressors 400. Vorliegend ist ein Beispiel gegeben für eine Periodendauer von 0,019 sek., was eine Frequenz von 52,6 1/sek. entspricht - dies entspricht einer Drehzahl von nK = 3156 1/min. Für die genannte Periodendauer T lässt sich auch ein mittlerer Strom I_Mittel für den Betriebsstrom IB bestimmen.

Darüber hinaus ist festzustellen, dass mit steigendem Druck die Stromaufnahme des Kompressors steigt. Aufgrund des Zusammenhangs zwischen Stromaufnahme und Drehzahl eines zweistufigen Kompressors ergibt sich ein mit dem Gegendruck zunehmender Drehzahlabfall, der nicht erwünscht ist. Insbesondere bei Befüllung kleiner Volumina kommt es daher zu einem raschen und akustisch wahrnehmbaren Drehzahlabfall. Im Luftfedersystem tritt diese beispielsweise bei jeder Trocknerbefüllung zu Beginn eines Hebevorgangs oder des Speicherfüllens auf. Durch eine PWM-Ansteuerung des Kompressors kann die effektive Versorgungsspannung des Kompressors proportional zum PWM-Verhältnis reduziert werden. Da die Drehzahl annähernd proportional zur Versorgungsspannung ist, lässt sich damit die Drehzahl entsprechend reduzieren. Das Maß der notwendigen Drehzahlreduzierung bzw. der notwendigen Reduzierung der Versorgungsspannung wird aus dem gemessenen Kompressorstrom abgeleitet. Bei einer niedrigen Stromaufnahme wird die Versorgungsspannung und damit die Drehzahl auf einen definierten Wert reduziert. Der definierte Wert entspricht der Drehzahl, die sich bei einer höheren Last einstellen würde. So kann die höhere Last beispielsweise die Last bei maximalem Systemdruck sein. Die höhere Last kann auch die Last bei maximalem Balgdruck sein. Die höhere Last kann auch der Last bei einem beliebigen Druck entsprechen.

Der Zusammenhang zwischen PWM-Signal und Mindestdrehzahl lässt sich in eine Formel fassen, die lautet:

$$\text{PWM [\%]} = nK_{min} / (b \times IB + c),$$

mit IB=Betriebsstrom und wobei nK-min, b und c Konstanten sind (hier mit nK-min = 2800, b = -37,9 und c = 4000). Mittels nK-min wird die SOLL-Drehzahl nK-SOLL bestimmt, auf die reduziert wird.

In einer abgewandelten Ausführungsform kann eine abgewandelte Anlaufphase derart realisiert werden, dass zu Beginn einer Lastphase LaP und/oder im Übergang AnP-LaP von der Anlaufphase AnP zur Lastphase LaP mit einer voreingestellten Drehzahlregelung --in dem Fall Steuerung-- gearbeitet wird. Dazu kann vorgesehen sein, dass bei bekannter Drehzahl nK ein druckloser Start des Kompressors 400 vorgesehen ist. Auf dieser Grundlage kann es sich als vorteilhaft erweisen, dass ein vorgestelltes PWM-Verhältnis genutzt wird, um eine gleichbleibende Drehzahl zu erreichen.

In besondere kann in einem Sonderfall einer Nutzung einer Druckluftversorgungsanlage für eine Niveauverteilung angenommen werden, dass sich bei entsprechender Federauslegung der Druck kaum ändert. Insbesondere für diesen Fall aber auch generell zur Vermeidung eines länger andauernden Betriebs --der im schlimmsten Fall eine überhöhte Wärmeentwicklung im Halbleiterschalter und/oder einen negativen Einfluss auf das Fördervolumen zur Folge haben kann-- kann der Kompressor über eine zeitlich einstellbare Rampe auf 100 % hochgefahren werden mit einem berechneten PWM-Verhältnis < 100 %. Die Weiterbildung hat erkannt, dass --wenn dies entsprechend langsam umgesetzt wird-- die damit verbundene Drehzahländerung subjektiv nicht wahrnehmbar ist.

Beispielsweise kann ein Wert 0,3 % PWM / sec bis 0,7 % PWM / sec vorgegeben werden.

Bezugszeichenliste (Bestandteil der Beschreibung)

| | |
|---|---|
| 0 | Luftzuführung |
| 0.1 | Filterelement |
| 1 | Druckluftzuführung |
| 2 | Druckluftanschluss |
| 3 | Entlüftungsanschluss |
| 100 | Lufttrockner |
| 100' | Trocknermodul |
| 140 | Trockenbehälter |
| 180 | Lufttrockner |
| 200 | Pneumatikhauptleitung |
| 230 | Zweigleitung |
| 240 | Entlüftungsleitung |
| 250 | pneumatische Steuerleitung |
| 251 | Leitungsabschnitt |
| 260 | Entlüftungsleitung |
| 261 | Zweiganschluss |
| 300 | Ventilanordnung |
| 301 | Flansch |
| 301' | Luftverteilmodul |
| 310 | Wegeventilanordnung |
| 310' | Ventilgehäusemodul |
| 311 | Rückschlagventil |
| 312 | Entlüftungsventil |
| 313 | Druckbegrenzung |
| 314 | Kolben |
| 315 | Feder |
| 320 | Magnetventil, Steuerventil |
| 321 | Steuerleitung |
| 322 | Spule |
| 330 | Boostventil |
| 330' | Boostventilgehäusemodul |
| 331 | erste Drossel |
| 332 | zweite Drossel |
| 400 | Kompressor |
| 400' | Verdichter |
| 401 | erste Verdichterstufe |
| 402 | zweite Verdichterstufe |
| 500 | Elektromotor |
| 600 | Pneumatikleitung |
| 601, 602, 603, 604 | Federzweigleitung |
| 605 | Speicherzweigleitung |
| 610 | Galerie |
| 700 | Aufhängung |
| 710 | Federlagerungen |
| 720 | Befestigungsanschlüsse |
| 900, 900' | Steuereinrichtung, Regeleinrichtung |
| 910 | Steuermodul |
| 911 | Steuerbaustein |
| 912 | Programmmodul |
| 913 | Speicher |
| 920 | Regelmodul |
| 921 | erste Regeleinheit |

| 922 | zweite Regeleinheit |
| 930 | Analyseeinheit |
| 923 | dritte Regeleinheit |
| 931, 932, 933 | Eingangsmodule |
| 940 | Aktuatorik |
| 1000 | Druckluftversorgungsanlage |
| 1001 | Pneumatikanlage |
| 1002 | Druckluftversorgungssystem |
| 1010 | Ventilblock |
| 1011, 1012, 1013, 1014 | vier Bälge |
| 1015 | Speicher |
| 1111, 1112, 1113, 1114 | Magnetventil |
| A1, A2 | Anschlussebene, Anschlussseite |
| AnP | Anlaufphase |
| AnP1, AnP2 | erste und zweite Zeitphase |
| AnP21, AnP22, AnP23, AnP24 | Anlaufzeitabschnitte |
| AnT1, AnT2, AnT3, AnT4 | Verweilzeiten im Anlaufzeitabschnitt |
| AnGF1 bis AnGF4 | Anlaufschwellstrom-Grenzfunktion GF |
| LaP | Lastphase |
| AusP | Ausschaltphase |
| AusP1, AusP2, AusP3, AusP4 | Ausschaltzeitabschnitte |
| AusT1, AusT2, AusT3, AusT4 | Verweilzeiten in Ausschaltzeitabschnitten |
| G | Gehäuseanordnung |
| GF | Schwellstrom-Grenzfunktion |
| Grad1, Grad2, Grad3, Grad4 | Steigungen |
| IB | Betriebsstrom |
| E(IB) | Enveloppe |
| IB-IST | Ist-Wert des Betriebsstroms |
| I-END | Endstrom |
| IS | Schwellstrom |
| IS-SOLL | IST-Wert des Schwellstroms |
| I-START, I-END | Startstrom, Endstrom |
| I0, I1, I2, I3, I4 | Stützstellen |
| M | Kompressormotor, Elektromotor |
| LaP | Lastphase |
| nK | Drehzahl des Elektromotors / Kompressors |
| nK-IST | IST-Wert der Drehzahl des Kompressors |
| nK-SOLL | Drehzahlobergrenze |
| nK-min | bestimmt SOLL-Drehzahl auf die reduziert wird |
| pK | Kompressorgegendruck |
| R1, R2, R3, R4, R5, R6 | Regelschritte |
| I, II | erster, zweiter Zweig der Regelschleife |
| SR | Sampling-Rate |
| SS | Steuersignal |
| UB | Betriebsspannung |
| t | Zeit |
| T-START | Startzeit |
| T1, T2, T3, T4 | Verweilzeiten |
| PWM | PWM Kennlinie |
| R | Regelschleife |
| Ueff | Effektiv-Spannungsrampe |

**Patentansprüche**

1. Verdichter (400') zur Erzeugung von Druckluft, insbesondere für eine Druckluftversorgungsanlage (1000) eines Fahrzeugs, mit:

- einem Elektromotor (500) in Form eines bürstenbehafteten Gleichstrom-Elektromotors (BDC Elektromotor) und mit
- einem Kompressor, der über den Elektromotor (500) antreibbar ist, wobei
- der Elektromotor (500) mittels einem elektronischen Steuermodul (910) einer Steuereinrichtung (900) unter Begrenzung eines Betriebsstroms (IB) des Elektromotors (500) steuerbar ist, **dadurch gekennzeichnet, dass** das elektronische Steuermodul (910)
- einen Steuerbaustein (911) und ein ausführbares Programmmodul (912) aufweist, und
- ausgebildet ist, einen den Betriebsstrom (IB) begrenzenden Schwellstrom (IS) zeitlich variabel vorzugeben.

2. Verdichter nach Anspruch 1 **dadurch gekennzeichnet, dass** der Kompressor ein zweistufiger Kompressor (400) mit wenigstens einer ersten und einer zweiten Verdichterstufe (401, 402) ist.

3. Verdichter nach Anspruch 1 oder 2 **dadurch gekennzeichnet, dass**

- das Programmmodul (912) ausgebildet ist, zur Begrenzung des Betriebsstroms (IB) wenigstens eine Schwellstrom-Grenzfunktion (GF) des Schwellstroms (IS) als Funktion der Zeit (t) vorzugeben, und
- der Steuerbaustein (911) ausgebildet ist, eine Betriebsenergie oder einen sonstigen Betriebsparameter des Elektromotors (500) zu unterbrechen, insbesondere eine Betriebsspannung (UB) desselben.

4. Verdichter nach einem der vorhergehenden Ansprüche **dadurch gekennzeichnet, dass** das elektronische Steuermodul (910), insbesondere eine Analyseeinheit (930) und/oder eine Aktuatorik (940), ausgebildet ist zu prüfen, ob der Betriebsstrom (IB) den Schwellstrom (IS) der wenigstens einen Schwellstrom-Grenzfunktion (GF) erreicht und/oder die Betriebsenergie zu unterbrechen, insbesondere nach einer vorbestimmten Unterbrecherfrequenz (SR) und/oder für den Fall, dass der Betriebsstrom (IB) den Schwellstrom (IS) der wenigstens einen Schwellstrom-Grenzfunktion (GF) erreicht.

5. Verdichter nach einem der vorhergehenden Ansprüche **dadurch gekennzeichnet, dass** das elektronische Steuermodul (910) weiter eine Analyseeinheit (930) aufweist, insbesondere eine Sampling-Einheit, über die ein tatsächlicher Betriebsstrom (IB) des Elektromotors (500) mit einer vorgebbaren Sampling-Rate (SS) signalisierbar ist, insbesondere im Bereich zwischen 1Hz und 10.000 Hz signalisierbar ist, und/oder eine Vergleichseinheit aufweist, mittels der ein signalisierter tatsächlicher Betriebsstrom (IB) mit einem Schwellstrom (IS) als Funktion der Zeit vergleichbar ist.

6. Verdichter nach einem der vorhergehenden Ansprüche **dadurch gekennzeichnet, dass**

- eine erste Zeitphase (Anp1) einer Anlaufphase (AnP) unmittelbar nach einer Startanforderung des Kompressors frei von einer direkten Begrenzung der Amplitude eines Betriebsstromes (IB) ist und/oder
- eine zweite Zeitphase (AnP2) einer Anlaufphase (AnP) nach der ersten Zeitphase (AnP1) ausgebildet ist, den den Betriebsstrom (IB) begrenzenden Schwellstrom (IS) zeitlich variabel vorzugeben.

7. Verdichter nach Anspruch 6 **dadurch gekennzeichnet, dass** die erste Zeitphase (AnP1) eine, vorzugsweise variabel fest oder in Abhängigkeit von einer gemessenen Betriebsspannung (IU) vorgebbare, Startdauer (T-START) hat, die unterhalb einer Zeitdauer der zweiten Zeitphase (AnP2) liegt, insbesondere unterhalb einer Verweilzeit (AnT_i) in einem Anlaufabschnitt der zweiten Zeitphase (AnP2).

8. Verdichter nach einem der vorhergehenden Ansprüche **dadurch gekennzeichnet, dass** mittels der Schwellstrom-Grenzfunktion (GF) wenigstens ein Maximalwert (Ii) und/oder Gradient (Gradi) des Schwellstroms (IS) und/oder Betriebsstroms (IB) vorgebbar ist.

9. Verdichter nach einem der vorhergehenden Ansprüche **dadurch gekennzeichnet, dass** die Schwellstrom-Grenzfunktion (GF) in einer zweiten Zeitphase (Anp2) vorgegeben ist, insbesondere die Schwellstrom-Grenzfunktion (GF) eine lineare Funktion der Zeit (t) ist.

10. Verdichter nach einem der vorhergehenden Ansprüche **dadurch gekennzeichnet, dass** das elektronische Steuermodul (910) zur Steuerung eines Sanft-anlaufs (CSS) ausgebildet ist, in einer zeitlich begrenzten ersten Zeitphase (AnP1) einen unbegrenzten Anlauf-Betriebsstrom (IB) zuzulassen und in einer zeitlich begrenzten zweiten Zeitphase (AnP2) den zeitlich variabel begrenzten Anlauf-Betriebsstrom (IB) vorzugeben, insbesondere wobei eine erste Anzahl und/oder eine zweite Anzahl eine natürliche Zahl ist, insbesondere zwischen 4 und 10 liegt.

11. Verdichter nach einem der vorhergehenden Ansprüche **dadurch gekennzeichnet, dass** das Programmmodul (912) ausgebildet ist, in einer Anlaufphase (AnP) für einen Anlauf-Betriebsstrom eine Anzahl erster Anlaufschwellstrom-Grenzfunktionen (AnGF1, AnGF2, AnGF3, AnGF4) für eine Anzahl erster Anlauf-Zeitabschnitte (AnP21, AnP22, AnP23, AnP24) und eine Anzahl zweiter Anlaufschwellstrom-Grenzfunktionen (AnGF1, AnGF2, AnGF3, AnGF4) für eine Anzahl zweiter Anlauf-Zeitabschnitte (AnP21, AnP22, AnP23, AnP24) vorzugeben.

12. Verdichter nach einem der vorhergehenden Ansprüche **dadurch gekennzeichnet, dass** ein Wechsel von einer Anlaufphase (AnP) --umfassend einen Sanftanlauf (CSS) des Kompressors--zu einer Lastphase (LaP)--nur umfassend einen stromunbegrenzten Lauf des Kompressors (400)-- unabhängig von einem Betriebsstrom (IB) des Kompressors (400) erfolgt.

13. Verdichter nach einem der vorhergehenden Ansprüche **dadurch gekennzeichnet, dass** das elektronische Steuermodul (910) weiter zur Steuerung eines Sanftausschaltens ausgebildet ist derart, dass eine zeitlich begrenzte Zeitphase eines zeitlich variabel begrenzten Ausschalt-Betriebsstroms (IB) vorgegeben ist.

14. Verdichter nach einem der vorhergehenden Ansprüche **dadurch gekennzeichnet, dass** das Programmmodul (912) ausgebildet ist,
für den Ausschalt-Betriebsstrom wenigstens eine Anzahl erster Ausschaltschwellstrom-Grenzfunktionen (AusGF1, AusGF2, AusGF3, AusGF4) für eine Anzahl erster Ausschalt-Zeitabschnitte (AusP1, AusP2, AusP3, AusP4) und eine Anzahl zweiter Ausschaltschwellstrom-Grenzfunktionen (AusGF1, AusGF2, AusGF3, AusGF4) für eine Anzahl zweiter Ausschalt-Zeitabschnitte (AusP1, AusP2, AusP3, AusP4) vorzugeben, insbesondere wobei eine erste und/oder zweite Anzahl eine natürliche Zahl ist, insbesondere zwischen 4 und 10 liegt.

15. Verdichter nach einem der vorhergehenden Ansprüche **dadurch gekennzeichnet, dass** die elektronische Steuereinrichtung (900) weiter eine erste Regeleinheit (921) aufweist, die ausgebildet ist, einen Betriebsstrom (IB) des Elektromotors zu regeln unter Vorgabe des Schwellstroms (IS) als SOLL-Strom.

16. Verdichter nach einem der vorhergehenden Ansprüche **dadurch gekennzeichnet, dass** das elektronische Steuereinrichtung (900) weiter ein Regelmodul (920) mit einer zweiten Regeleinheit (922) aufweist, die ausgebildet ist, eine Drehzahl (nK) des Elektromotors (500) zu regeln, insbesondere unter Vorgabe einer bereichsweise konstanten Drehzahlobergrenze, insbesondere als Funktion des Betriebsstroms (IB) oder einer daraus abgeleiteten Größe.

17. Verdichter nach Anspruch 15 oder 16 **dadurch gekennzeichnet, dass** die Regeleinheit ausgebildet ist, eine Drehzahlvariabilität des Elektromotors (500) als Funktion des Betriebsstroms (IB) oder einer daraus abgeleiteten Größe über eine PWM-Kennlinie (PWM) zu begrenzen, vorzugsweise in Form einer, insbesondere im Programmmodul (912) hinterlegten Effektiv-Spannungsrampe (Ueff) als Funktion des Betriebsstroms (IB).

18. Verdichter nach Anspruch 17 **dadurch gekennzeichnet, dass**

- die PWM-Kennlinie eine untere Effektiv-Spannung, insbesondere entsprechend einem niedrigen PWM-Wert (PWMn), bei niedrigem Strom (In)und eine obere Effektiv-Spannung, insbesondere entsprechend einem hohen PWM-Wert (PWMn), bei hohem Strom (Ih)definiert, wobei die untere Effektiv-Spannung unter der oberen Effektiv-Spannung liegt, und
- die Drehzahlvariabilität des Elektromotors (500) einen oberen Drehzahl-Wert (nKo) bei niedrigem Strom und einen unteren Drehzahl-Wert (nKu) bei hohem Strom aufweist, wobei der obere Drehzahl-Wert (nKo) über dem unteren Drehzahl-Wert (nKu) liegt.

19. Verdichter nach einem der vorhergehenden Ansprüche **gekennzeichnet durch** eine Analyseeinheit (930) mittels der eine IST-Drehzahl (nK-IST) des Kompressors aus einem zeitlichen Verlauf des Betriebsstroms (IB) ermittelbar ist, wobei

- die Frequenz (f) aus einer Vielzahl von periodischen Spitzen einer Stromwelligkeit bestimmt wird,
- die Frequenz (f) der IST-Drehzahl (nK-IST) des Kompressors zugeordnet wird, und
- die IST-Drehzahl (nK-IST) als Eingangswert für eine erste Regeleinheit (921) des Regelmoduls (920) des elektronischen Steuereinrichtunges (900) genutzt wird, die ausgebildet ist, eine Drehzahl (nK) des Elektromotors zu regeln.

20. Druckluftversorgungsanlage (1000) zum Betreiben einer Pneumatikanlage 1020, insbesondere einer Luftfederanlage eines Fahrzeugs, aufweisend:

- eine Druckluftzuführung (1) mit einem Verdichter (400') nach einem der vorherigen Ansprüche zur Erzeugung von Druckluft, mit einem Elektromotor (500) in Form eines bürstenbehafteten Gleichstrom-Elektromotors (BDC Elektromotor) und einem Kompressor (400),
- einen Druckluftanschluss (2) zur Pneumatikanlage (1001)
- einen Entlüftungsanschluss (3) zur Umgebung
- eine erste pneumatische Verbindung zwischen der Druckluftzuführung 1 und dem Druckluftanschluss (2), die einen Lufttrockner (180) und ein Trennventil aufweist,
- eine zweite pneumatische Verbindung zwischen dem Druckluftanschluss (2) und dem Entlüftungsanschluss (3).

21. Pneumatisches System mit der Druckluftversorgungsanlage (1000) nach Anspruch 20 und mit einer Pneumatikanlage (1001), wobei die Pneumatikanlage (1001) in Form einer Luftfederanlage gebildet ist, die eine Galerie 610 und wenigstens eine an die Galerie (610) pneumatisch angeschlossene Zweigleitung (601, 602, 603, 604, 605) mit einem Balg und/oder einem Speicher (1011, 1012, 1013, 1014, 1015) sowie einem dem Balg und/oder dem Speicher vorgeordneten Wegeventil (1111, 1112, 1113, 1114, 1115) aufweist.

22. Verfahren zum Betrieb eines Elektromotors in Form eines bürstenbehafteten Gleichstrom-Elektromotors (BDC Elektromotor) in einem Verdichter (400') zur Erzeugung von Druckluft für eine Druckluftversorgungsanlage eines Fahrzeugs, mit dem Elektromotor (500) und einem Kompressor (400), der über den Elektromotor (500) angetrieben wird, wobei der Elektromotor (500) mittels einem elektronischen Steuermodul (910) gesteuert wird, mittels dem ein Betriebsstrom (IB) des Elektromotors (500) begrenzt wird,
**dadurch gekennzeichnet, dass**
mittels dem elektronischen Steuermodul (910), aufweisend einen Steuerbaustein (911) mit einem ausführbaren Programmmodul (912), ein den Betriebsstrom (IB) begrenzender Schwellstrom (IS) zeitlich variabel vorgegeben wird.

23. Verfahren nach Anspruch 22 **dadurch gekennzeichnet, dass** zur Begrenzung des Betriebsstroms (IB) mittels dem ausführbaren Programmmodul (912) wenigstens eine Schwellstrom-Grenzfunktion (GF) des Schwellstroms (IS) als Funktion der Zeit (t) vorgegeben wird, und der Betrieb des Elektromotors (500) mittels dem Steuerbaustein (911) unterbrochen wird, insbesondere eine Betriebsspannung (UB) desselben, für den Fall, dass der Betriebsstrom (IB) den Schwellstrom (IS) der wenigstens einen Schwellstrom-Grenzfunktion (GF) erreicht.

## Claims

1. Compressor (400') for producing compressed air, in particular for a compressed air supply installation (1000) of a vehicle, having:

- an electric motor (500) in the form of a brushed DC electric motor (BDC electric motor) and having
- a compressor unit which can be driven by means of the electric motor (500), wherein
- the electric motor (500) can be controlled by means of an electronic control module (910) of a control device (900) with limitation of an operating current (IB) of the electric motor (500), **characterized in that** the electronic control module (910) has
- a control assembly (911) and an executable program module (912), and
- is designed to predefine in a chronologically variable fashion a threshold current (IS) which limits the operating current (IB).

2. Compressor according to Claim 1, **characterized in that**
the compressor unit is a two-stage compressor unit (400) having at least a first and a second compressor stage (401, 402).

3. Compressor according to Claim 1 or 2, **characterized in that**

- the program module (912) is designed to predefine at least one threshold current-limiting function (GF) of the threshold current (IS) as a function of the time (t) in order to limit the operating current (IB), and
- the control assembly (911) is designed to interrupt operating energy or some other operating parameter of the electric motor (500), in particular an operating voltage (UB) thereof.

4. Compressor according to one of the preceding claims, **characterized in that** the electronic control module (910), in particular an analysis unit (930) and/or an actuator system (940), is designed to test whether the operating current (IB) reaches the threshold current (IS) of the at least one threshold current-limiting function (GF) and/or to interrupt the operating energy, in particular after a predetermined interruption frequency (SR) and/or in the event of the operating current (IB) reaching the threshold current (IS) of the at least one threshold current-limiting function (GF).

5. Compressor according to one of the preceding claims, **characterized in that** the electronic control module (910) also has an analysis unit (930), in particular a sampling unit, by means of which an actual operating current (IB) of the electric motor (500) can be signaled with a predefinable sampling rate (SS), in particular can be signaled in the range between 1 Hz and 10 000 Hz, and/or has a comparison unit by means of which a signaled actual operating current (IB) can be compared with a threshold current (IS) as a function of the time.

6. Compressor according to one of the preceding claims, **characterized in that**

   - a first time phase (AnP1) of a start phase (AnP) directly after a starting request of the compressor unit is free of direct limitation of the amplitude of an operating current (IB) and/or
   - a second time phase (AnP2) of a start phase (AnP) after the first time phase (AnP1) is designed to predefine in a chronologically variable fashion the threshold current (IS) which limits the operating current (IB).

7. Compressor according to Claim 6, **characterized in that** the first time phase (AnP1) has a starting period (T-START) which can be predefined in a preferably variably fixed fashion or as a function of a measured operating voltage (IU) and which has a duration which is less than that of the second time phase (AnP2), in particular less than a dwell time (AnT_i) in a start section of the second time phase (AnP2).

8. Compressor according to one of the preceding claims, **characterized in that** at least one maximum value (Ii) and/or gradient (Gradi) of the threshold current (IS) and/or operating current (IB) can be predefined by means of the threshold current-limiting function (GF).

9. Compressor according to one of the preceding claims, **characterized in that** the threshold current-limiting function (GF) is predefined in a second time phase (AnP2), in particular the threshold current-limiting function (GF) is a linear function of the time (t) .

10. Compressor according to one of the preceding claims, **characterized in that** the electronic control module (910) is designed to control a soft start (CSS), to permit an unlimited start operating current (IB) in a chronologically limited, first time phase (AnP1) and to predefine the start operating current (IB) which is limited in a chronologically variable fashion, in a chronologically limited second time phase (AnP2), in particular wherein a first number and/or a second number is a natural number, in particular between 4 and 10.

11. Compressor according to one of the preceding claims, **characterized in that** the program module (912) is designed to predefine a number of first start threshold current-limiting functions (AnGF1, AnGF2, AnGF3, AnGF4) for a number of first start time periods (AnP21, AnP22, AnP23, AnP24) in a start phase (AnP) for a start operating current, and to predefine a number of second start threshold current-limiting functions (AnGF1, AnGF2, AnGF3, AnGF4) for a number of second start time periods (AnP21, AnP22, AnP23, AnP24).

12. Compressor according to one of the preceding claims, **characterized in that** a changeover from a start phase (AnP), having a soft start (CSS) of the compressor unit, to a load phase (LaP), which only comprises load-unlimited running of the compressor unit (400), takes place independently of an operating current (IB) of the compressor unit (400).

13. Compressor according to one of the preceding claims, **characterized in that** the electronic control module (910) is also designed to control a soft shutdown in such a way that a chronologically limited time phase of a shutdown operating current (IB) which is limited in a chronologically variable fashion is predefined.

14. Compressor according to one of the preceding claims, **characterized in that** the program module (912) is designed to predefine, for the shutdown operating current, at least one number of first shutdown threshold current-limiting functions (AusGF1, AusGF2, AusGF3, AusGF4) for a number of first shutdown time periods (AusP1, AusP2, AusP3, AusP4), and a number of second shutdown threshold current-limiting functions (AusGF1, AusGF2, AusGF3, AusGF4) for a number of second shutdown time periods (AusP1, AusP2, AusP3, AusP4), in particular wherein a first and/or second number is a natural number, in particular between 4 and 10.

15. Compressor according to one of the preceding claims, **characterized in that** the electronic control device (900) also has a first regulating unit (921) which is designed to regulate an operating current (IB) of the electric motor while predefining the threshold current (IS) as a SETPOINT current.

16. Compressor according to one of the preceding claims, **characterized in that** the electronic control device (900) also has a regulating module (920) with a second regulating unit (922) which is designed to regulate a rotational speed (nK) of the electric motor (500), in particular while predefining a rotational speed upper limit which is constant in certain areas, in particular as a function of the operating current (IB) or of a variable derived therefrom.

17. Compressor according to Claim 15 or 16, **characterized in that** the regulating unit is designed to limit the rotational speed variability of the electric motor (500) as a function of the operating current (IB) or of a variable derived therefrom over a PWM characteristic curve (PWM), preferably in the form of an effective voltage ramp (Ueff), stored in particular in the program module (912), as a function of the operating current (IB).

18. Compressor according to Claim 17, **characterized in that**

   - the PWM characteristic curve defines a lower effective voltage, in particular corresponding to a low PWM value (PWMn), in the case of a low current (In), and an upper effective voltage, in particular corresponding to a high PWM value (PWMn), in the case of a high current (Ih), wherein the lower effective voltage is below the upper effective voltage, and
   - the rotational speed variability of the electric motor (500) has an upper rotational speed value (nKo) in the case of a low current and a lower rotational speed value (nKu) in the case of a high current, wherein the upper rotational speed value (nKo) is above the lower rotational speed value (nKu).

19. Compressor according to one of the preceding claims, **characterized by** an analysis unit (930) by means of which an ACTUAL rotational speed (nK-ACT) of the compressor unit can be determined from a chronological profile of the operating current (IB), wherein

   - the frequency (f) is determined from a plurality of periodic peaks of a current ripple,
   - the frequency (f) is assigned to the ACTUAL rotational speed (nK-ACT) of the compressor unit, and
   - the ACTUAL rotational speed (nK-ACT) is used as an input value for a first regulating unit (921) of the regulating module (920) of the electronic control device (900) and is designed to regulate a rotational speed (nK) of the electric motor.

20. Compressed air supply installation (1000) for operating a pneumatic system 1020, in particular an air spring system of a vehicle, having:

   - a compressed air feed (1) with a compressor (400') according to one of the preceding claims for producing compressed air, having an electric motor (500) in the form of a brushed DC electric motor (BDC electric motor) and a compressor unit (400),
   - a compressed air port (2) to the pneumatic system (1001)
   - a venting port (3) to the surroundings
   - a first pneumatic connection between the compressed air feed 1 and the compressed air port (2), which pneumatic connection has an air dryer (180) and an isolating valve, and
   - a second pneumatic connection between the compressed air port (2) and the venting port (3).

21. Pneumatic system having the compressed air supply installation (1000) according to Claim 20 and having a pneumatic system (1001), wherein the pneumatic system (1001) is embodied in the form of an air spring system which has a gallery 610 and at least one branch line (601, 602, 603, 604, 605) which is connected pneumatically to the gallery (610) and has a bellows and/or an accumulator (1011, 1012, 1013, 1014, 1015) as well as a directional control valve (1111, 1112, 1113, 1114, 1115) arranged upstream of the bellows and/or the accumulator.

22. Method for operating an electric motor in the form of a brushed DC electric motor (BDC electric motor) in a compressor (400') for producing compressed air for a compressed air supply installation of a vehicle, having the electric motor (500) and a compressor unit (400) which is driven by means of the electric motor (500), wherein the electric motor (500) is controlled by means of an electronic control module (910) by means of which an operating current (IB) of the electric motor (500) is limited,

**characterized in that**

a threshold current (IS) which limits the operating current (IB) is predefined in a chronologically variable fashion by means of the electronic control module (910) having a control assembly (911) with an executable program module (912).

23. Method according to Claim 22, **characterized in that**, in order to limit the operating current (IB) by means of the executable program module (912), at least one threshold current-limiting function (GF) of the threshold current (IS) is predefined as a function of the time (t), and the operation of the electric motor (500) is interrupted by means of the control module (911), in particular an operating voltage (UB) thereof in the event of the operating current (IB) reaching the threshold current (IS) of the at least one threshold current-limiting function (GF).

**Revendications**

1. Compresseur (400') destiné à la production d'air comprimé, en particulier pour une installation d'alimentation en air comprimé (1000) d'un véhicule, avec :

   - un moteur électrique (500) sous forme de moteur électrique à courant continu avec balais (moteur électrique BDC) et avec
   - un ensemble de compression qui peut être entraîné par le biais du moteur électrique (500),
   - le moteur électrique (500) pouvant être commandé au moyen d'un module de commande (910) électronique d'un système de commande (900) avec limitation d'un courant de service (IB) du moteur électrique (500),
   **caractérisé en ce que** le module de commande (910) électronique
   - présente un composant de commande (911) et un module de programme (912) exécutable, et
   - est constitué pour prescrire au préalable de façon variable dans le temps un courant de seuil (IS) limitant le courant de service (IB).

2. Compresseur selon la revendication 1, **caractérisé en ce que** l'ensemble de compression est un ensemble de compression (400) à deux étages avec au moins un premier et un deuxième étage de compresseur (401, 402).

3. Compresseur selon la revendication 1 ou 2, **caractérisé en ce que**

   - le module de programme (912) est constitué pour, en vue de la limitation du courant de service (IB), prescrire au préalable au moins une fonction limite de courant de seuil (GF) du courant de seuil (IS) en fonction du temps (t), et
   - le composant de commande (911) est constitué pour interrompre une énergie de fonctionnement ou un autre paramètre de fonctionnement du moteur électrique (500), en particulier une tension de service (UB) de celui-ci.

4. Compresseur selon l'une des revendications précédentes, **caractérisé en ce que** le module de commande (910) électronique, en particulier une unité d'analyse (930) et/ou un ensemble d'actuateurs (940), est constitué pour contrôler si le courant de service (IB) atteint le courant de seuil (IS) de la fonction limite de courant de seuil (GF) au moins au nombre de un et/ou pour interrompre l'énergie de fonctionnement, en particulier après une fréquence d'interrupteur (SR) prédéfinie et/ou au cas où le courant de service (IB) atteint le courant de seuil (IS) de la fonction limite de courant de seuil (GF) au moins au nombre de un.

5. Compresseur selon l'une des revendications précédentes, **caractérisé en ce que** le module de commande (910) électronique présente également une unité d'analyse (930), en particulier une unité d'échantillonnage, par le biais de laquelle un courant de service (IB) réel du moteur électrique (500) peut être signalé avec un taux d'échantillonnage (SS) spécifiable au préalable, en particulier peut être signalé dans la plage entre 1 Hz et 10 000 Hz, et/ou présente une unité de comparaison au moyen de laquelle un courant de service (IB) réel signalé peut être comparé à un courant de seuil (IS) en fonction du temps.

6. Compresseur selon l'une des revendications précédentes, **caractérisé en ce que**

   - une première phase temporelle (Anp1) d'une phase de démarrage (AnP) tout de suite après une demande de lancement de l'ensemble de compression est exempte d'une limitation directe de l'amplitude d'un courant de service (IB) et/ou

- une deuxième phase temporelle (AnP2) d'une phase de démarrage (AnP) après la première phase temporelle (Anp1) est constituée pour prescrire au préalable de façon variable dans le temps le courant de seuil (IS) limitant le courant de service (IB).

**7.** Compresseur selon la revendication 6, **caractérisé en ce que** la première phase temporelle (AnP1) a une durée de lancement (T-START), spécifiable au préalable de préférence de façon fixement variable ou en fonction d'une tension de service (IU) mesurée, qui est inférieure à une durée de la deuxième phase temporelle (AnP2), en particulier inférieure à un temps de séjour (AnT_i) dans un tronçon de démarrage de la deuxième phase temporelle (AnP2).

**8.** Compresseur selon l'une des revendications précédentes, **caractérisé en ce que**, au moyen de la fonction limite de courant de seuil (GF), au moins une valeur maximale (Ii) et/ou un gradient (Gradi) du courant de seuil (IS) ou du courant de service (IB) est spécifiable au préalable.

**9.** Compresseur selon l'une des revendications précédentes, **caractérisé en ce que** la fonction limite de courant de seuil (GF) est spécifiée au préalable dans une deuxième phase temporelle (AnP2), en particulier la fonction limite de courant de seuil (GF) est une fonction linéaire du temps (t).

**10.** Compresseur selon l'une des revendications précédentes, **caractérisé en ce que** le module de commande (910) électronique destiné à la commande d'un démarrage en douceur (CSS) est constitué pour, dans une première phase temporelle (AnP1) limitée dans le temps, autoriser un courant de service (IB) de démarrage illimité et, dans une deuxième phase temporelle (AnP2) limitée dans le temps, spécifier au préalable le courant de service (IB) de démarrage limité de façon variable dans le temps, un premier nombre et/ou un deuxième nombre étant en particulier un nombre naturel, compris en particulier entre 4 et 10.

**11.** Compresseur selon l'une des revendications précédentes, **caractérisé en ce que** le module de programme (912) est constitué pour, dans une phase de démarrage (AnP) pour un courant de service de démarrage, spécifier au préalable un nombre de premières fonctions limites de courant de seuil de démarrage (AnGF1, AnGF2, AnGF3, AnGF4) pour un nombre de premières périodes de temps de démarrage (AnP21, AnP22, AnP23, AnP24) et un nombre de deuxièmes fonctions limites de courant de seuil de démarrage (AnGF1, AnGF2, AnGF3, AnGF4) pour un nombre de deuxièmes périodes de temps de démarrage (AnP21, AnP22, AnP23, AnP24).

**12.** Compresseur selon l'une des revendications précédentes, **caractérisé en ce qu'**un changement à partir d'une phase de démarrage (AnP) -- comprenant un démarrage en douceur (CSS) de l'ensemble de compression -- vers une phase de charge (LaP) -- comprenant seulement une marche non limitée en courant de l'ensemble de compression (400) -- s'effectue indépendamment d'un courant de service (IB) de l'ensemble de compression (400).

**13.** Compresseur selon l'une des revendications précédentes, **caractérisé en ce que** le module de commande (910) électronique est constitué également pour la commande d'une mise hors circuit en douceur de telle sorte qu'une phase temporelle limitée dans le temps d'un courant de service (IB) de mise hors circuit limité de façon variable dans le temps est spécifiée au préalable.

**14.** Compresseur selon l'une des revendications précédentes, **caractérisé en ce que** le module de programme (912) est constitué pour, pour le courant de service de mise hors circuit, spécifier au préalable au moins un nombre de premières fonctions limites de courant de seuil de mise hors circuit (AusGF1, AusGF2, AusGF3, AusGF4) pour un nombre de premières périodes de temps de mise hors circuit (AusP1, AusP2, AusP3, AusP4) et un nombre de deuxièmes fonctions limites de courant de seuil de mise hors circuit (AusGF1, AusGF2, AusGF3, AusGF4) pour un nombre de deuxièmes périodes de temps de mise hors circuit (AusP1, AusP2, AusP3, AusP4), en particulier un premier et/ou un deuxième nombre étant un nombre naturel, en particulier situé entre 4 et 10.

**15.** Compresseur selon l'une des revendications précédentes, **caractérisé en ce que** le système de commande (900) électronique présente en outre une première unité de régulation (921) qui est constituée pour réguler un courant de service (IB) du moteur électrique avec spécification préalable du courant de seuil (IS) en tant que courant DE CONSIGNE.

**16.** Compresseur selon l'une des revendications précédentes, **caractérisé en ce que** le système de commande (900) électronique présente en outre un module de régulation (920) avec une deuxième unité de régulation (922) qui est constituée pour réguler une vitesse de rotation (nK) du moteur électrique (500), en particulier avec spécification préalable d'une limite supérieure de vitesse de rotation constante par secteurs, en particulier en fonction du courant de service (IB) ou d'une grandeur qui en dérive.

17. Compresseur selon la revendication 15 ou 16, **caractérisé en ce que** l'unité de régulation est constituée pour limiter une variabilité de la vitesse de rotation du moteur électrique (500) en fonction du courant de service (IB) ou d'une grandeur qui en dérive sur une courbe caractéristique PWM (PWM), de préférence sous forme d'une rampe de tension effective (Ueff), en particulier stockée dans le module de programme (912), en fonction du courant de service (IB).

18. Compresseur selon la revendication 17, **caractérisé en ce que**

- la courbe caractéristique PWM définit une tension effective inférieure, en particulier selon une valeur PWM (PWMn) faible, pour un courant faible (In), et une une tension effective supérieure, en particulier selon une valeur PWM (PWMn) élevée, pour un courant élevé (Ih), la tension effective inférieure étant inférieure à la tension effective supérieure, et
- la variabilité de la vitesse de rotation du moteur électrique (500) présente une valeur de vitesse de rotation supérieure (nKo) pour un courant faible et une valeur de vitesse de rotation inférieure (nKu) pour un courant élevé, la valeur de vitesse de rotation supérieure (nKo) étant supérieure à la valeur de vitesse de rotation inférieure (nKu).

19. Compresseur selon l'une des revendications précédentes, **caractérisé par** une unité d'analyse (930) au moyen de laquelle une vitesse de rotation RÉELLE (nk-IST) de l'ensemble de compression peut être déterminée à partir d'une allure dans le temps du courant de service (IB),

- la fréquence (f) étant déterminée à partir d'une multiplicité de pointes périodiques d'une ondulation de courant,
- la fréquence (f) étant affectée à la vitesse de rotation RÉELLE (nK-IST) de l'ensemble de compression, et
- la vitesse de rotation RÉELLE (nK-IST) étant utilisée en tant que valeur d'entrée pour une première unité de régulation (921) du module de régulation (920) du système de commande (900) électronique qui est constituée pour réguler une vitesse de rotation (nK) du moteur électrique.

20. Installation d'alimentation en air comprimé (1000) destinée au fonctionnement d'une installation pneumatique (1020), en particulier d'une installation de suspension pneumatique d'un véhicule, présentant :

- une amenée d'air comprimé (1) avec un compresseur (400') selon l'une des revendications précédentes pour la production d'air comprimé, avec un moteur électrique (500) sous forme de moteur électrique à courant continu avec balais (moteur électrique BDC) et avec un ensemble de compression (400),
- un raccord d'air comprimé (2) pour l'installation pneumatique (1001),
- un raccord de purge d'air (3) vers l'environnement,
- un premier raccordement pneumatique entre l'amenée d'air comprimé (1) et le raccord d'air comprimé (2) qui présente un dessiccateur d'air (180) et une soupape de sectionnement,
- un deuxième raccordement pneumatique entre le raccord d'air comprimé (2) et le raccord de purge d'air (3).

21. Système pneumatique avec l'installation d'alimentation en air comprimé (1000) selon la revendication 20 et avec une installation pneumatique (1001), l'installation pneumatique (1001) étant formée sous forme d'une installation de suspension pneumatique qui présente une galerie 610 et au moins une conduite de dérivation (601, 602, 603, 604, 605) raccordée pneumatiquement à la galerie (610), avec un soufflet et/ou un accumulateur (1011, 1012, 1013, 1014, 1015) ainsi qu'avec un distributeur (1111, 1112, 1113, 1114, 1115) monté en aval de l'accumulateur.

22. Procédé de fonctionnement d'un moteur électrique sous forme de moteur électrique à courant continu avec balais (moteur électrique BDC) dans un compresseur (400') destiné à la production d'air comprimé pour une installation d'alimentation en air comprimé d'un véhicule, avec le moteur électrique (500) et un ensemble de compression (400), qui est entraîné par le biais du moteur électrique (500), le moteur électrique (500) étant commandé au moyen d'un module de commande (910) électronique au moyen duquel un courant de service (IB) du moteur électrique (500) est limité, **caractérisé en ce que**,

au moyen du module de commande (910) électronique, présentant un composant de commande (911) avec un module de programme (912) exécutable, un courant de seuil (IS) limitant le courant de service (IB) est spécifié au préalable de façon variable dans le temps.

**23.** Procédé selon la revendication 22, **caractérisé en ce que**, pour la limitation du courant de service (IB) au moyen du module de programme (912) exécutable, au moins une fonction limite de courant de seuil (GF) du courant de seuil (IS) est spécifiée au préalable en fonction du temps (t), et le fonctionnement du moteur électrique (500) est interrompu au moyen du composant de commande (911), en particulier une tension de service (UB) de celui-ci, au cas où le courant de service (IB) atteint le courant de seuil (IS) de la fonction limite de courant de seuil (GF) au moins au nombre de un.

**Fig. 1**

Fig. 2

Fig. 3

Fig. 4A

Fig. 4B

Fig. 4C

900

910

| IB-IST — | AnP1 | | | | AnP |
| | AnP2 | AnP21 | ─GF | | |
| IB-IST — | | AnP22 | ─GF | | |
| | | AnP23 | ─GF | | |
| | | AnP24 | ─GF | | |

| $n_K$ — | R | | LaP |
| (IB)' — | | | |

| | AusP | AusP1 | ─GF | | AusP |
| IB-IST — | | AusP2 | ─GF | | |
| | | AusP3 | ─GF | | |
| | | AusP4 | ─GF | | |

**Fig. 5**

**Fig. 6**

Fig. 7

**Fig. 8**

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010045993 A
- DE 2758309 C2
- WO 2010045993 A1
- DE 102012201243 A1
- US 20050068001 A1